# EUROPÄISCHE PATENTSCHRIFT

(11) **EP 3 169 638 B1**
(45) Veröffentlichungstag und Bekanntmachung des Hinweises auf die Patenterteilung: **20.02.2019**
(21) Anmeldenummer: 15741507.6
(22) Anmeldetag: 06.07.2015
(51) Int. Cl.: C03C 17/00

(54) **VERFAHREN ZUR HERSTELLUNG EINES BESCHICHTETEN SUBSTRATS, SCHEIBENFÖRMIGES SUBSTRAT, UMFASSEND WENIGSTENS ZWEI MITTELS ERWÄRMEN AUFGEBRACHTE SCHICHTEN UND VERWENDUNG DES BESCHICHTETEN SUBSTRATS**
METHOD FOR PRODUCING A COATED SUBSTRATE, PLANAR SUBSTRATE, COMPRISING AT LEAST TWO LAYERS APPLIED BY MEANS OF HEATING, AND THE USE OF THE COATED SUBSTRATE
PROCÉDÉ DE FABRICATION D'UN SUBSTRAT REVÊTU, SUBSTRAT EN FORME DE PLAQUE COMPRENANT AU MOINS DEUX COUCHES DÉPOSÉES PAR CHAUFFAGE ET UTILISATION DU SUBSTRAT REVÊTU

(30) Priorität: 16.07.2014 DE 102014213859; 09.10.2014 DE 102014220457
(43) Veröffentlichungstag der Anmeldung: 24.05.2017
(73) Patentinhaber: SCHOTT AG, 55122 Mainz (DE)
(72) Erfinder: SIEBERS, Friedrich, 55283 Nierstein (DE); SCHWALL, Michael, 55116 Mainz (DE); BOCKMEYER, Matthias, 55116 Mainz (DE); STEIGENBERGER, Vera, 65474 Bischofsheim (DE)
(74) Vertreter: Blumbach · Zinngrebe Patent- und Rechtsanwälte
(86) Internationale Anmeldenummer: PCT/EP2015/065329
(87) Internationale Veröffentlichungsnummer: WO 2016/008752

(56) Entgegenhaltungen:
- EP-A1- 1 845 069
- DE-A1-102011 115 379
- DE-A1-102012 103 507

## Beschreibung

Die Erfindung betrifft ein Verfahren zur Herstellung eines beschichteten Substrats, ein scheibenförmiges Substrat, umfassend wenigstens zwei mittels Erwärmen aufgebrachte Schichten und die Verwendung des beschichteten Substrats.

Es ist bekannt, dass anorganische, glasbasierte Beschichtungen den Oberflächen besondere Eigenschaften verleihen. Der Glasanteil der Beschichtung, oft auch als Glasfritte oder Glasfluss bezeichnet, verleiht der Beschichtung besondere chemische und physikalische Eigenschaften. Dies sind z.B. chemische Beständigkeit, Abrieb- und Kratzfestigkeit sowie thermische Beständigkeit. Gegenüber Beschichtungen mit organischer Matrix zeichnen sich die anorganischen Beschichtungen durch höheren Glanz und höhere Beständigkeit gegenüber UV-Bestrahlung aus. Durch Zugabe von farbgebenden Pigmenten, Antireflexions- oder Mattierungszusätzen ergeben sich vielfältige Möglichkeiten, die beschichteten Scheiben und daraus hergestellte Artikel hinsichtlich Ästhetik und Design zu gestalten und zu differenzieren. Der Beschichtungsvorgang selbst wird meist als Glasieren, Emaillieren, Dekorieren oder Bedrucken bezeichnet. Für die Beschichtung sind vielfältige, technisch ausgereifte Verfahren und Anlagen im Gebrauch. Neben der Trockenbeschichtung wie z.B. über elektrostatische Pulverauftragung existieren viele Beschichtungsverfahren, bei denen ein flüssiges bzw. pastenartiges Beschichtungsmaterial aufgebracht wird. Diese Paste kann mittels verschiedener Verfahren, beispielsweise mit dem Siebdruck, Tampondruck, Abziehbildverfahren oder auch über Tauch- und Sprühverfahren auf die Oberfläche der Scheibe appliziert werden. Die Paste besteht üblicherweise aus dem gemahlenen Glaspulver, den optional zugesetzten Pigmenten und/oder Zusatzstoffen und den organischen Hilfsstoffen, die beim Einbrennen und Glattfließen der Beschichtung entfernt werden. Für die Beschichtung von Glas-, Glaskeramik- oder Keramik-Scheiben sind eine Vielzahl von Emaille-Zusammensetzungen bekannt.

So wird in der DE 197 21 737 C1 eine blei- und cadmiumfreie Glaszusammensetzung zum Glasieren, Emaillieren und Dekorieren von Gläsern oder Glaskeramiken sowie ein Verfahren zu Herstellung einer damit beschichteten Glaskeramik beschrieben.

Der Zusatz von strukturbildenden Partikeln zu glasbasierten Beschichtungen, um diesen besondere Eigenschaften zu verleihen, ist bekannt. So beschreibt die DE 100 16 485 A1 glasbasierte Beschichtungen auf Glas-, Glaskeramik- oder Metall-Substraten, wobei strukturbildende Partikel mit einem mittleren Partikeldurchmesser im Bereich von 0,1 bis 50 µm eingesetzt werden. Die resultierende, mikro-raue und zusätzlich hydrophobierte Oberflächenstruktur verleiht der Schicht selbstreinigende Eigenschaften (Lotus-Effekt). Der Effekt basiert auf einer rauen nicht abgerundeten Oberflächen-Mikrostruktur.

Auch die Schrift EP 2 592 056 A1 beschreibt Schichten auf Glas- oder Glaskeramik-Substraten mit strukturgebenden anorganischen Partikeln in der Beschichtung. Die Partikel bewirken Erhebungen auf der Schicht und damit eine haptisch fühlbare Struktur. Durch den Zusatz der strukturgebenden Partikel wird die dem Nutzer zugewandte Oberfläche mit einer haptischen Funktion versehen. Die EP 1 845 069 A1 beschreibt ein Verfahren zur beidseitigen Beschichtung von Glas- oder Glaskeramikscheiben.

Artikel mit haftvermindernden Beschichtungen und Verfahren zu deren Herstellung sind bekannt. So beschreibt die US 2001/0031360 A1 ein Verfahren zur Herstellung von sogenannten "non-sticking" Oberflächen bei dem Diamantpulver der Größe < 50µm in eine Glasfritte eingebettet wird. Die Glasfritte wirkt als Binder und bildet die Schicht, mit der die Haltbarkeit von Artikeln wie Kochgeschirr oder Freizeitartikel erhöht wird und der Oberfläche "non-sticking" Eigenschaften verliehen werden.

Weiter ist aus der GB 2 241 179 A bekannt, dass Polymerbeschichtungen mit Glaskugeln versehen werden, um Oberflächen mit haftvermindernden Eigenschaften zu erhalten.

Emaille-Farben mit haftvermindernden Eigenschaften für die Beschichtung von Glasscheiben sind bekannt. Diese haftvermindernden Eigenschaften beruhen auf folgendem Prinzip. Die randlichen schwarzen Beschichtungen von Automobilscheiben werden über glasbasierte Emaille-Farben mit haftvermindernden Eigenschaften hergestellt. Dies ist erforderlich, wenn z.B. beim Pressbiegen die Farbe bei höheren Temperaturen in Kontakt mit dem Presswerkzeug kommt. Auch beim gemeinsamen Biegen von Glasscheiben für einen passgenauen Laminatverbund sind haftvermindernden Farben erforderlich, wenn eine dekorierte Glasseite bei prozessbedingten höheren Temperaturen einen direkten Kontakt mit einer anderen Glasscheibe hat. Die haftvermindernden Eigenschaften dieser Emaille-Farben beruhen darauf, dass die Glasfritte teilweise kristallisiert. Die Kristalle verhindern das Ankleben der Farben bei höheren Temperaturen. Die Kristallisation muss eng kontrolliert werden, weil es sonst bei zu schwacher Kristallisation zum Kleben kommt. Bei zu starker Kristallisation der Glasfritte schmilzt diese nicht porenfrei auf und die Farbe wird darüber hinaus grau. Bei der Kristallisation wird über die Zusammensetzung der Glaskomponente, die Temperaturführung und ggf. durch Zusatz von Keimbildnern versucht, die Einhaltung dieses engen Prozessfensters sicherzustellen. Die gebräuchlichsten auskristallisierenden Phasen sind Wismuth-Silikate, Zink-Silikate und Zink-Borate. Das beschriebene, enge Prozessfenster ist für dieses Verfahren wirtschaftlich und technisch nachteilig und die Möglichkeiten zur Gestaltung hinsichtlich des Designs sind beschränkt. Solche Farben sind in der EP 0 895 969 A1 offenbart.

Durch die Verwendung von sogenannten Levitationsöfen ist das beidseitige Aufbringen von glasbasierten Beschichtungen möglich, weil die Beschichtung beim Einbrand keinen Kontakt mit der Unterlage hat. Im kritischen Temperaturbereich, bei dem die Glaskomponente aufschmilzt und glattfließt, wird der Kontakt durch ein Gaspolster vermieden, so dass es nicht zum Ankleben und zur Schädigung der Beschichtung kommen kann. Konstruktiv müssen die keramischen Unterlagen dabei gasdurchlässig sein und Menge und Temperatur des Gases müssen definiert kontrolliert werden. Auch müssen Führung und Transport der Scheiben bewerkstelligt werden. Technisch ist es kaum möglich, den Prozessschritt des thermischen Vorspannens, der durch Anblasen mit kalter Luft an das heiße Glassubstrat durchgeführt wird, ohne Auflage zu integrieren, da die Scheiben fixiert werden müssen. Aufgrund der hohen Betriebs- und Anschaffungskosten ist dieses Verfahren daher mit wirtschaftlichen Nachteilen verbunden.

Scheiben, meist in transparenter Form, finden im Innen- und Außenbereich eine breite Verwendung. So z.B. im Innenbereich als Sichtscheiben von elektrischen Geräten, in Türen, Duschkabinen und Küchenmöbeln oder als Fassadenelement in der Außenarchitektur. Um die Möglichkeiten der Gestaltung und des Designs zu erweitern, ist es wünschenswert, beidseitig anorganische Beschichtungen anzuwenden. Die Vorteile der anorganischen glasbasierten Beschichtungen können so auf beiden Seiten dargestellt werden.

Hieraus ergibt sich die Aufgabe der vorliegenden Erfindung, ein Verfahren zur einfachen, wirtschaftlichen Herstellung eines beidseitig mit unter Wärmeeinwirkung aufgebrachten Schichten beschichteten Substrats zu finden. Weiterhin ergibt sich die Aufgabe, ein einfach und wirtschaftlich herstellbares scheibenförmiges Substrat bereitzustellen, das wenigstens zwei mittels Erwärmen aufgebrachte Schichten umfasst, und die Verwendung des beschichteten Substrats anzugeben. Die Beschichtung soll den Anforderungen genügen die im praktischen Einsatz, insbesondere im Haushalt, an beschichtete, scheibenförmige Substrate gestellt werden, wie Abrieb- und Kratzfestigkeit sowie thermische und chemische Beständigkeit

Gemäß Anspruch 1 wird die Aufgabe gelöst durch ein Verfahren zur Herstellung eines beschichteten Substrats, umfassend die Schritte:
- Bereitstellen eines scheibenförmigen Substrats;
- Aufbringen eines ersten schichtbildenden Materials auf einer ersten Seite des Substrats, wobei das erste schichtbildende Material wenigstens ein Glaspulver und Partikel umfasst, wobei die Partikel Erhebungen auf der Schicht bewirken, wobei die Erweichungstemperatur oder die Schmelztemperatur der Partikel größer ist als die Erweichungstemperatur des Glaspulvers;
- Erwärmen des beschichteten Substrats unter Erhalt der ersten Schicht mit Erhebungen;
- Aufbringen eines zweiten schichtbildenden Materials auf einer zweiten Seite des Substrats, wobei die zweite Seite gegenüber der ersten Seite liegt;
- Erwärmen des beschichteten Substrats unter Erhalt der zweiten Schicht, wobei das Substrat während des Erwärmens ganz oder teilweise auf den Erhebungen der ersten Schicht aufliegt, wobei
- die zweite Schicht ebenfalls eine Glaskomponente umfasst und die Schichtmaterialien auf beiden Seiten des Substrats bevorzugt aus anorganischem glasbasiertem Emaille bestehen, und wobei
- sich die Erweichungstemperaturen der Glaskomponenten auf beiden Seiten des Substrats um weniger als 200 K unterscheiden.

Die Partikel sind also strukturbildende Partikel.

Während des Erwärmens des beschichteten Substrats unter Erhalt der zweiten Schicht, wobei das Substrat während des Erwärmens ganz oder teilweise auf den Erhebungen der ersten Schicht aufliegt, werden die Erhebungen der ersten Schicht im Wesentlichen nicht mehr verändert. Beim Einsatz von strukturbildenden Partikeln mit organischen Anteilen, die sich beim Einbrand umwandeln, gelten die Betrachtungen für die Partikelarten und -geometrien nach dem Einbrand der Schicht.

Erfindungsgemäß ist die Erweichungstemperatur oder die Schmelztemperatur der Partikel größer als die Erweichungstemperatur des Glaspulvers. Mit "die Erweichungstemperatur oder die Schmelztemperatur der Partikel ist größer als die Erweichungstemperatur des Glaspulvers" ist folgendes gemeint: Sofern die Partikel eine Schmelztemperatur besitzen (z.B. Teilchen aus anorganischen Verbindungen wie Al₂O₃ oder ZrO₂), muss diese größer sein als die Erweichungstemperatur des Glaspulvers. Sofern die Partikel eine Erweichungstemperatur besitzen (z.B. Partikel aus Gläsern), muss diese größer sein als die Erweichungstemperatur des Glaspulvers.

Die Temperatur beim Erwärmen liegt vorzugweise auf oder über der Erweichungstemperatur des Glaspulvers und unterhalb der Schmelztemperatur oder der Erweichungstemperatur der Partikel.

Vorzugsweise ist der mittlere Durchmesser der Partikel größer als der mittlere Durchmesser des Glaspulvers.
Damit die Partikel Erhebungen auf der Schicht bewirken wird das schichtbildende Material vorzugsweise in einer Schichtdicke aufgebracht, dass die Partikel aus der Schicht herausragen können.

Erfindungsgemäß weist die erste Schicht nach dem ersten Erwärmen sogenannte Antisticking-Eigenschaften auf. Mit Antisticking-Eigenschaften im Sinne dieser Anmeldung ist im Wesentlichen gemeint, dass das Substrat während des zweiten Erwärmens ganz oder teilweise auf den Erhebungen der ersten Schicht aufliegt, wobei die erste Schicht nicht auf der Unterlage, auf der das Substrat aufliegt, haftet. Dadurch wird die erste Schicht nicht oder nur unwesentlich in ihrer Struktur verändert.

Bevorzugt umfasst auch das zweite schichtbildende Material der zweiten Schicht mindestens ein Glaspulver. Die Vorteile einer glasbasierten anorganischen Emaille-Beschichtung sind somit nach dem Einbrand auf beiden Seiten realisiert. Die Einbrenntemperatur beim Erwärmen der zweiten Beschichtung soll bevorzugt mindestens 500 °C und weiter bevorzugt mindestens 600 °C betragen. Höhere Temperaturen sind vorteilhaft für die Schichteigenschaften, wie chemische Beständigkeit, Glanz, Abrieb- und Kratzfestigkeit sowie thermische Beständigkeit.

Die bevorzugten Werte für die Einbrenntemperatur gelten auch für die Erwärmung der erste Schicht.

Um auf beiden Seiten vorteilhafte Schichteigenschaften zu erreichen, ist es vorteilhaft, wenn sich die Erwärmungstemperaturen der beiden Schichten um weniger als 100 °C unterschieden.

Weiterhin wird die Aufgabe gelöst durch ein scheibenförmiges Substrat, umfassend wenigstens zwei mittels Erwärmen aufgebrachte Schichten, wobei die erste Schicht auf einer ersten Seite des Substrats aufgebracht ist und wenigstens eine Glaskomponente und Partikel umfasst, dass die Partikel Erhebungen auf der ersten Schicht bewirken, dass die Erweichungstemperatur oder die Schmelztemperatur der Partikel größer ist als die Erweichungstemperatur der Glaskomponente, und dass die zweite Schicht auf einer zweiten Seite des Substrats aufgebracht ist, wobei die zweite Seite gegenüber der ersten Seite liegt.

Die Glaskomponente wird bevorzugt aus einem Glaspulver erhalten.

Für die Antisticking-Eigenschaften muss die Mikrostruktur der Oberfläche der ersten Schicht nach dem Erwärmen so ausgebildet sein, dass die gebildeten Erhebungen als Abstandshalter wirken und eine keramische Unterlage beim zweiten Erwärmen (z.B. Einbrand) keinen Kontakt mit der klebenden Glaskomponente in der Beschichtung hat. Um die Haftung der Beschichtung auf dem Substrat und die Fixierung der strukturbildenden Partikel sicherzustellen, sind Temperaturen erforderlich, bei denen die Glaskomponente in der Beschichtung glatt fließt. Mit diesen erforderlichen Prozessen ist zwangsläufig aufgrund der niedrigen Viskosität eine erhöhte Klebewirkung der Glaskomponente verbunden. Um diese Mechanismen und Funktionen beim Einbrand sicherzustellen, soll das erste schichtbildende Material (die Beschichtung) vorzugsweise aus mindestens 5 Vol.-% eines Glaspulvers (schichtbildenden Glaskomponente) und aus strukturbildenden Partikeln, insbesondere anorganischen Partikeln, bestehen. Für die Vermeidung des Anhaftens wird ein Anteil an strukturbildenden Partikeln von mindestens 0,1 Vol.-% bevorzugt. Bei einem geringeren Anteil als 5 Vol.-% an Glaspulver wird die Fixierung der strukturbildenden Partikeln nicht mehr zuverlässig gewährleistet und die Kratzfestigkeit des beschichteten Substrates unzulässig vermindert. Bevorzugt beträgt der Anteil des Glaspulvers mindestens 10 und besonders bevorzugt mindestens 20 Vol.-%. Die Obergrenze des Anteils des Glaspulvers beträgt bevorzugt höchstens 99,7 Vol.-%, weiter bevorzugt höchstens 80 Vol.-% und besonders bevorzugt höchstens 70 Vol.-%. Bei höheren Gehalten als 99,7 Vol.-% an Glaspulver besteht die Gefahr, dass die Antisticking-Eigenschaften nachteilig beeinflusst werden.

Der zu 100 Vol.-% fehlende Anteil wird durch die Partikel und ggf. weitere Zusätze zum ersten schichtbildenden Material bestimmt. Das organische Hilfsmittel das beim Einbrand entfernt wird, wird bei der Rechnung nicht berücksichtigt. Der Anteil an strukturbildenden Partikeln wird auch abhängig von der Rauigkeit der keramischen Unterlage während des Erwärmens gewählt. Eine rauere Unterlage benötigt höhere Anteile. Bevorzugt ist der Anteil an strukturbildenden Partikeln 0,3 bis 80 Vol.-%. Versuche haben gezeigt, das auch bei diesen sehr niedrigen Partikelzusätzen von 0,3 Vol.-%, abhängig von der Art der Unterlage die Haftung vermieden werden, d.h. die gewünschte Antisticking-Eigenschaft erzielt werden kann.

Der mittlere Durchmesser der Partikel beträgt vorzugsweise 0,5 bis 40 µm. Der mittlere Partikeldurchmesser wird so gewählt, dass sichergestellt ist, dass die Partikel als Erhebungen aus der Schicht herausragen.

In einer bevorzugten Ausführungsform umfasst die zweite Schicht ebenfalls eine Glaskomponente. Besonders bevorzugt bestehen die Schichtmaterialien auf beiden Seiten des Substrats aus anorganischem glasbasiertem Emaille.

In einer weiteren bevorzugten Ausführungsform unterscheiden sich die Erweichungstemperaturen der Glaskomponenten auf beiden Seiten des Substrats um weniger als 100 K.

Das erfndungsgemäße Substrat kann also au fbeiden Seiten hochwertige glasbasierte Schichten, bevorzugt Emaille-Schichten aufweisen, wobei die Erweichungstemperaturen der Glaskomponente sehr dicht beieinander liegen können. So ist es auch denkbar, dass auf beiden Seiten dieselbe glasbasierte Schicht, bevorzugt dasselbe glasbasierte Emaille verwendet werden kann.

Die mittleren Abstände der Partikel sollen dabei vorzugsweise weniger als das zwanzigfache des mittleren Partikeldurchmessers betragen. Die mittleren Abstände sind bezogen auf den Abstand der Partikelmittelpunkte. Bei höheren mittleren Abständen der Partikel werden die Antisticking-Eigenschaften nicht mehr zuverlässig gewährleistet. Bevorzugt sind mittlere Abstände der Partikel von weniger als dem zehnfachen und besonders bevorzugt von weniger als dem fünffachen des mittleren Partikeldurchmessers.

Gemessen an ihrem mittleren Partikeldurchmesser sollen die Partikel in ausreichender Zahl mindestens 10 % bis höchstens 70 % aus der Schicht, die durch das Erwärmen im Wesentlichen aus dem Glaspulver gebildet wird, herausragen. Wenn die Partikel weniger als 10 % herausragen sind die Antisticking-Eigenschaften durch Klebeeffekte beeinträchtigt. Bei größeren Erhebungen als 70 % besteht die Gefahr, dass die Partikel nicht mehr hinreichend fixiert sind und die Kratzfestigkeit unzulässig verringert wird. Bevorzugt betragen die Erhebungen maximal 60 % und besonders bevorzugt maximal 50 %. Für eine weiter verbesserte Antisticking-Eigenschaft beträgt die Untergrenze der Erhebungen wenigstens 20 % und bevorzugt mindestens 30 % des mittleren Partikeldurchmessers.

Für die Ausbildung der Oberflächenstruktur der ersten Schicht (aufgrund der Partikel, die Erhebungen bewirken) ist es also wichtig, dass die Menge des Glaspulvers (schichtbildenden Glaskomponente) vorzugsweise so gewählt wird, dass die sich die beim Erwärmen (z.B. Einbrand) einstellende mittlere Dicke der glasbasierten Schicht immer kleiner ist als der mittlere Partikeldurchmesser. Diese Beziehung gilt auch für einen mehrschichtigen Aufbau der Beschichtung. Wenn die Beschichtung über mehrere Schichten aufgebaut wird, ist die sich nach dem letzten Erwärmen einstellende Oberflächenstruktur maßgeblich.

Gute Eigenschaften werden erreicht mit Mikro-Rauigkeiten gemessen als PV-Wert zwischen 3 bis 35 µm. Der PV-Wert ist die Höhendifferenz zwischen tiefstem und höchstem Punkt auf der Mess-Strecke. Dabei entspricht der höchste Punkt der Spitze des herausragenden Partikels und der tiefste Punkt liegt zwischen zwei Partikeln und wird durch die glasbildende Schicht gebildet. Die untere Grenze wird durch die Forderung nach Antisticking-Eigenschaften bestimmt und die Obergrenze durch die nach ausreichender Kratzfestigkeit. Der Bereich des PV-Wertes entspricht Rauigkeitswerten Rₐ von 0,1 bis 1,5 µm. Der Rₐ-Wert ist definitionsgemäß die mittlere arithmetische Abweichung der Höhenmesspunkte von der mittleren Höhenebene. Bevorzugt beträgt der PV-Wert mindestens 5 und weiter bevorzugt mindestens 8 µm. Für verbesserte Kratzfestigkeit soll der PV-Wert bevorzugt höchstens 25, weiter bevorzugt höchstens 15 und besonders bevorzugt höchstens 10 µm betragen. Ein spezieller Rauigkeitswert, der etwas über die Art der Oberflächenstruktur aussagt, ist die sogenannte Skewness Rₛₖ. Der Skewness-Wert sagt etwas über die Symmetrie der Oberflächenprofile. Niedrige und negative Werte sind charakteristisch für kuppig-wellige Oberflächen, positive Werte für spitz-zackige. Rₛₖ- Werte von unter 6 bevorzugt unter 2, und besonders bevorzugt unter 1 sind bevorzugt.

Für die Optimierung der Antisticking-Eigenschaften sollte der Flächenbelegungsgrad durch die strukturbildenden Partikel größer sein als 0,4 %, bevorzugt größer 5 % und besonders bevorzugt größer 10%.

Bei Einhaltung der Oberflächenstruktur kann die durch die Menge des Glaspulvers bestimmte Dicke der glasigen Schicht variabel eingestellt werden. So kann die mittlere Dicke der glasigen Schicht zwischen den Partikeln vorteilhaft zwischen 0,5 bis 50 µm und bevorzugt zwischen 1 bis 25 µm eingestellt werden.
Es sind vergleichsweise geringe mittlere Schichtdicken von 1 bis 5 µm bereits ausreichend und eingestellt.

Für das scheibenförmige Substrat, umfassend wenigstens zwei mittels Erwärmen aufgebrachte Schichten, bedeuten Antisticking-Eigenschaften, dass die beim ersten Erwärmen (z.B. ersten Einbrand) erhaltene erste Schicht mit Erhebungen beim zweiten Erwärmen (z.B. zweiten Einbrand) im Kontakt mit einer Unterlage aus einem Brennhilfsmittel, wie z.B. einer Unterlagenplatte oder keramische Rollen, ohne Qualitätseinbußen prozessierbar ist. Beim direkten Kontakt mit den keramischen Unterlagenmaterialien wirken die strukturbildenden Partikel als Abstandshalter und die Beschichtung bleibt insgesamt erhalten. Das heißt, bei Qualitätsprüfungen nach dem Erwärmen sind keine Teile der Beschichtung durch Ankleben herausgerissen oder beschädigt. Auch bei einer späteren Qualitätskontrolle bezüglich Kratzfestigkeit, Haften und Abrieb, z.B. durch die "Tesafilm-Methode" (Klebeband-Test) oder über Metallschaber, bleibt die Beschichtung haften, und es sind keine störenden Effekte (Pinholes) erkennbar.

In einer vorteilhaften Ausgestaltung besitzen die strukturbildenden Partikel eine im Wesentlichen kantenlose, runde Außenkontur. Bevorzugt sind sie in Kugelform ausgebildet. Aufgrund ihrer abgerundeten, kantenlosen Außenkontur sind die Antisticking-Eigenschaften weiter optimiert, da sich die meist rauen keramischen Oberflächen der Unterlagenmaterialien weniger mit der Beschichtung verzahnen können.
Auch für die Kratzfestigkeit ist diese abgerundete Außenkontur in der Regel vorteilhaft. Ein abrasiver Gegenstand oder eine Testspitze gleiten besser über die Oberfläche und beschädigen die Oberfläche weniger durch Deformation oder Herauslösen von Schichtbestandteilen. Weiter wurde gefunden, dass auch die Auffälligkeit gegenüber Fingerabdrücken und Verschmutzungen bei der gerundeten Oberfläche verringert ist. Gegenüber raueren und gezackten Oberflächen sind die Kapillarkräfte für Flüssigkeiten verringert. Die abgerundeten Partikel sind durch das Glaspulver (schichtbildende Glaskomponente) in der Beschichtung fixiert und ragen mit den Erhebungen aus dieser Schicht heraus. Dabei soll die Abweichung der Außenkontur von der Kugelform weniger als +/-30 % betragen.

Weiter ist es vorteilhaft, wenn die in der Beschichtung enthaltenen strukturbildenden Partikel von ähnlicher Größe sind. Bevorzugt sollen die strukturbildenden Partikel in ihrer Größenverteilung innerhalb einer Toleranz von weniger als 10 µm Größenunterschied zwischen dem d₉₀- und dem d₅₀-Wert liegen. Die Form und Größenverteilung der Partikel ist also mit den Forderungen an ihre Funktion als Abstandshalter verknüpft. Dadurch wird ein im Wesentlichen gleicher Abstand der Spitzen der strukturbildenden Partikel zur Scheibe gewährleistet. Damit stehen für eine gleichmäßige Lastverteilung, während das Substrat ganz oder teilweise auf den Erhebungen während des Erwärmens aufliegt, mehrere Auflagepunkte pro Fläche zur Verfügung. Das Gewicht des aufliegenden Substrats wird über mehrere Auflagepunkte gleichmäßig auf die Unterlage verteilt. Spannungsspitzen an einzelnen strukturbildenden Partikeln, die zum Herausbrechen der Partikel führen können, werden vermieden.

In einer besonderen Ausführungsform bestehen die strukturbildenden Partikel nach dem Einbrand der Schicht aus einem anorganischen Inertstoff. Ihre Schmelztemperatur oder Erweichungstemperatur soll oberhalb der Einbrenntemperatur der Beschichtung und damit oberhalb der Erweichungstemperatur des Glaspulvers liegen. Um die Antisticking-Eigenschaften zu gewährleisten, dürfen sich die strukturbildenden Partikel beim Erwärmen (z.B. Einbrand) nicht unzulässig unter dem Gewicht des Substrats verformen, damit sie als Abstandshalter fungieren können. Es ist daher vorteilhaft, wenn sich die Außenkontur der strukturgebenden Partikel nicht bei der Temperatur des Einbrennvorgangs ändert. Da typische Temperaturen beim Erwärmen von Beschichtungen oberhalb 500°C liegen, sollte die Erweichungstemperatur der strukturgebenden Partikel oberhalb 500°C, aber auf jeden Fall oberhalb der jeweiligen Einbrenntemperatur der Beschichtung liegen. Bevorzugt liegt die Erweichungstemperatur oberhalb von 700°C und weiter bevorzugt oberhalb 900°C. Beispiele für strukturbildende anorganische Partikel bestehen aus glasigen, glaskeramischen oder keramischen Materialien. Bei den Gläsern kommen Kalk-Natronglas, Kieselglas, SiO₂ und dessen Vorstufen wie Polysiloxane, Methylpolysiloxane, Phenylpolysiloxane, Methyphenylpolysiloxane, Silsesquisiloxane, Sol-Gel-Partikel, hergestellt über den Stöberprozess sowie alkaliarme Borosilikatglasvarianten und Alkali-Alumosilikatglasvarianten, in Frage. Bei den glaskeramischen Materialien kommen beispielsweise solche aus Magnesium- oder Lithium-Aluminiumsilikat und Glaskeramiken mit niedriger thermischer Ausdehnung zum Einsatz. In einer weiteren Ausführungsform können die strukturbildenden Partikel auch oxidische Materialien, beispielsweise Aluminiumoxid, kristallines Siliziumoxid, Zirkoniumoxid, Zinnoxid oder dotiertes Zirkoniumoxid sowie Zirkoniumsilikat, Cordierit, Titanoxid oder Zink- oder Magnesiumspinelle, oder Zeolithe, umfassen. Auch nichtoxidische Keramiken, beispielsweise Bornitrid, Siliziumnitrid, Zinnoxid können eingesetzt werden. Die Tabelle 2 zeigt einige ausgewählte strukturbildende Partikel und deren Eigenschaften.
Die strukturbildenden Partikel sind bevorzugt so gewählt, dass sie eine kompakte massive Natur haben, damit sie nicht durch die bei mechanischer Beanspruchung auftretenden Kräfte zerstört werden. Solche Kräfte treten bei Kratzvorgängen oder bei der Funktion als Abstandshalter auf. Beispielsweise sind Hohlkugeln, die diesen Belastungen nicht standhalten, also zu vermeiden.

Weiterhin wird das Material aus dem die strukturbildenden Partikel bestehen, bevorzugt so gewählt, dass der thermische Ausdehnungskoeffizient α_{20/300} mit dem des glasbasierten Schichtmaterials verträglich ist. Bevorzugt beträgt die Differenz weniger als 5 x 10⁻⁶/K und besonders bevorzugt weniger als 3 x 10⁻⁶/K.

Neben dem Glaspulver (schichtbildenden Glaskomponente) und den strukturbildenden Partikeln können in einer weiteren Ausgestaltung der Erfindung weitere anorganische Komponenten wie z.B. glasige, glaskeramische oder keramische Füllstoffe und/oder Pigmente in dem ersten schichtbildenden Material enthalten sein oder sich in der ersten Schicht wiederfinden. Diese Komponenten können dazu genutzt werden, die thermische Ausdehnung der Beschichtung besser auf die des Substrats einzustellen oder um bestimmte ästhetische Merkmale oder optische Effekte, wie z.B. eine Trübung, Mattierung oder Antireflexionseigenschaften zur erreichen. Als Pigmente sind unter anderem TiO₂, allgemein Spinelle, CrCu-Spinelle, Fe-Spinelle, Glimmer und glimmerbasierte Effektpigmente sowie allgemein übliche temperaturstabile Pigmente von Emaille-Farben geeignet. Weitere Beispiele sind keramische Füllstoffe mit niedriger oder negativer thermischer Ausdehnung wie Cordierit, Eukryptit und Zirkoniumwolframat.

Der Anteil der zusätzlichen anorganischen Komponenten in der Beschichtung beträgt bis zu 50 Vol.-%, vorzugsweise bis zu 40 Vol.-% und besonders bevorzugt bis zu 30 Vol.-%. Um einen Effekt zu erzielen sind in der Regel mindestens 0,5 Vol.-%, bevorzugt mindestens 2 Vol.-% erforderlich.

In einer weiteren Ausführungsform werden die Pigmente, Füllstoffe oder Zusatzstoffe selbst als strukturbildende Partikel in den erfindungsgemäßen Mengen, Größen und Formen eingesetzt.

Bei den organischen oder teilorganischen Vorstufen von Gläsern wie SiO₂ oder Keramiken können diese direkt der Pulvermischung für die Beschichtung zugegeben werden. Beim Einbrand der Beschichtung wandeln sich die Partikel um. Die organischen Bestandteile werden entfernt, wobei die Form erhalten bleibt. Alternativ können diese Vorstufen also z.B. Polymethylsilsesquioxan-Kugeln vorher erhitzt werden, um die organischen Komponenten auszubrennen und die Kugeln in SiO₂-Kugeln zu überführen. Dabei verringert sich die Größe der Partikel (hier um ca. 15 %), die Form bleibt erhalten. Die organischen Komponenten werden vorteilhafterweise ausgebrannt, um beim weiteren Erwärmen der ersten Schicht (Antisticking-Beschichtung) Probleme durch ein unvollständiges Ausbrennen der organischen Komponenten vor dem Glattfließen des Glaspulvers bei der Schichtbildung zu vermeiden. Sonst können geringe Reste an organischen Komponenten zur Blasenbildung in der Glaskomponente führen und zusätzliche Poren in der Schicht erzeugen. Bei Bi₂O₃-haltigen Glasfritten kann das Bi₂O₃ teilweise reduziert werden und so eine leicht braune Verfärbung resultieren. Bei transparenten und pigmentierten Beschichtungen kann diese leichte Verfärbung visuell störend sein.

Das Glaspulver (schichtbildende Glaskomponente) kann sehr unterschiedliche Zusammensetzungen aufweisen. Es sind zahlreiche Glaszusammensetzungen bekannt, welche angepasst an die Verformungstemperatur des zu beschichtenden Substrates, einen Erweichungsbereich von etwa 500°C bis 1000°C abdecken. Für das Glattfließen muss die Erwärmungstemperatur (z.B. Einbrandtemperatur) mindestens der Erweichungstemperatur Ew des Glaspulvers entsprechen. Ew ist die Temperatur bei der die Viskosität des Glases 10^{7,6} dPas beträgt. Die Zusammensetzung des Glaspulvers, auch Glasfluss oder Glasfritte genannt, wird also so ausgewählt, dass die Temperatur für das Glattfließen, ausgedrückt durch die Erweichungstemperatur Ew unterhalb der Verformungstemperatur des Substratmaterials liegt. Abhängig von der Scheibengeometrie und dem Erwärmungsprozess werden Verformungen beispielsweise bei Substraten aus Glas bereits deutlich unter deren Ew beobachtet. Das Glattfließen der Glaskomponente zu einer Schicht ist erforderlich, um die geforderten chemischen, physikalischen, mechanischen und optischen Eigenschaften zu gewährleisten. Auch für die Fixierung der strukturbildenden Partikel sowie für das Einbetten von optional zugesetzten Pigmenten und anderen Füllstoffen oder Zusätzen ist das Glattfließen notwendig. Weitere Anforderungen bei der Auswahl der Zusammensetzung des Glasflusses sind die Anpassung der thermischen Ausdehnung an die des Substratmaterials insbesondere bei größeren Sichtdicken oberhalb von ca. 5 bis 10 µm. Bei kleineren Schichtdicken relaxieren die Spannungen auch bei größeren Abweichungen der thermischen Ausdehnung, ohne dass es zu Abplatzungen oder Festigkeitsproblemen kommt. Weiterhin sind Eigenschaften wie die chemische Beständigkeit gegenüber Säuren und Basen oder hydrolytischen Angriffen sowie die Reinigungsfähigkeit und Kratzfestigkeit wichtige Auswahlkriterien.

Ein allgemeiner Zusammensetzungsbereich, aus dem die Zusammensetzungen des Glaspulvers ausgewählt sind, enthält

| | |
|---|---|
| SiO₂ | 20 - 70 Gew.-% |
| Al₂O₃ | 0 - 20 Gew.-% |
| B₂O₃ | 0 - 35 Gew.-% |
| Li₂O + Na₂O + K₂O | 0 - 30 Gew.-%, bevorzugt 3 - 25 Gew.-% |
| MgO + CaO + SrO + BaO | 0 - 25 Gew.-%, bevorzugt 0 - 15 Gew.-% |
| ZnO | 0 - 15 Gew.-% |
| TiO₂ + ZrO₂ | 0 - 10 Gew.-% |
| Bi₂O₃ | 0 - 65 Gew.-% |
| F | 0 - 3 Gew.-% |

sowie ggf. Farboxide wie CoO, Fe₂O₃, NiO oder Seltenerdelemente.

Die Beschichtungen und damit auch die Glaspulver (schichtbildenden Glaskomponenten) sind bevorzugt technisch frei von toxikologisch bedenklichen Komponenten wie Pb, Cd, Hg, Cr^{VI}. In Ausnahmefällen, wenn besonders intensive Farbtöne gewünscht sind, können cadmiumhaltige Pigmente eigesetzt werden. Bevorzugt werden diese Komponenten in der Beschichtung nicht absichtlich zugesetzt und der Gehalt ist kleiner als 500 ppm.

Aus wirtschaftlichen und technischen Gründen ist es vorteilhaft, wenn nur eine Seite des Substrats so ausgebildet ist, dass sie über Antisticking-Eigenschaften verfügt. Für die andere Seite gibt es dann keine Einschränkungen bezüglich der Ausgestaltung und des Designs. Es sind alle üblichen und bekannten Schichtdicken und Zusammensetzungen von Beschichtungen, insbesondere im Wesentlichen anorganische Emaille-Beschichtungen, möglich. Bevorzugt ist daher nur eine Seite des Substrats mit Zusätzen strukturbildender Partikel zur Erzielung von Antisticking-Eigenschaften ausgebildet.
In einer bevorzugten Ausführungsform ist das Substrat transparent oder transluzent. Um vielfältige, ästhetische Gestaltungsmöglichkeiten zu eröffnen ist es vorteilhaft, wenn auch die dem Betrachter abgewandte Seite mit der Beschichtung durch das Substrat visuell sichtbar ist. Die dem Betrachter zugewandte beschichtete Seite und die abgewandte mit der zweiten Beschichtung ermöglichen in ihrer Wechselwirkung vielfältige Designmöglichkeiten, um bestimmte ästhetische oder technische Ausgestaltungen zu realisieren. Die Lichttransmission Y des unbeschichteten Substrats, gemessen mit Normlicht C/2°, soll mehr als 5 % (transluzent), bevorzugt mehr als 20 % und besonders bevorzugt mehr als 80 % (transparent) betragen. Gemessen wird die Lichttransmission Y im CIE-Farbsystem. Dieser Wert gilt unabhängig von der Dicke des Substrats, die üblicherweise zwischen 2 und 10 mm betragen kann. Das Substratmaterial kann transparent sein, durch Farboxide transparent eingefärbt oder durch Lichtstreuung ein transluzentes Erscheinungsbild haben. Eine solche Lichtstreuung kann z.B. in Glaskeramiksubstraten oder Keramiksubstraten durch das Vorliegen von streuenden Kristallen im Substratmaterial erzeugt werden.

In einer bevorzugten Ausführungsform besteht das Substratmaterial aus einem Silikatglas (SiO₂-Gehalt > 40 Gew.-%). Vorteilhafterweise wird hier eine gefloatete Glasscheibe aus einem handelsüblichen Kalknatronglas als Substrat verwendet. Solche Kalknatronscheiben sind in verschiedenen Qualitäten, je nach Fe-Gehalt, erhältlich. Besonders bevorzugt ist die Kalknatronglasscheibe thermisch vorgespannt. In einer weiteren bevorzugten Ausführungsform handelt es sich um ein gefloatetes Borosilikatglas, wie beispielsweise die gefloateten Glastypen BOROFLOA® 3.3 oder BOROFLOAT® 4.0 der SCHOTT AG.
Die Substrate können auch dreidimensional verformt sein und in verschiedenen Geometrien vorliegen oder mit Markierungen versehen sein. Für diese Modifizierungen stehen verschiedene Technologien (Biegen, Senken, Lasern, Wasserstrahlen) zur Verfügung.
In einer alternativen Ausführungsform besteht das Substratmaterial aus einer Glaskeramik oder dem kristallisierbaren Ausgangsglas für diese. Bevorzugt sind Glaskeramiken des LAS-Typs (Lithium-Aluminium-Silikat-Glaskeramik), da diese wegen ihrer Temperaturbeständigkeit technisch breite Anwendung gefunden haben. Glaskeramiken dieses Typs sind mit Hochquarz-Mischkristallen oder Keatit-Mischkristallen als Hauptkristallphasen darstellbar und je nach Größe der Kristallite in verschiedenen Ausführungen transparent, transparent eingefärbt, transluzent oder opak herstellbar. Beispiele für solche Glaskeramiken sind die Produkte CERAN CLEARTRANS®, ROBAX® und NEXTREMA® der SCHOTT AG.

Scheibenförmige Substrate aus anorganischen nicht-metallischen Werkstoffen finden breite Verwendung im Innen- und Außenbereich. Bevorzugte Werkstoffe sind solche aus Glas, Glaskeramik oder Keramik. In einer bevorzugten Ausführungsform ist das Substrat transparent oder transluzent. In ihren Abmessungen orientieren sich die Substrate an der Verwendung und der Verfügbarkeit großtechnischer Herstellverfahren. So werden zum Beispiel im Außenbereich in der Architektur Scheiben eingesetzt, die sich an den Stockwerkshöhen von ca 3 m orientieren, bei Breiten von beispielsweise 2 m. Solche Abmessungen sind über den Floatprozess von Glas problemlos darstellbar. Im Innenbereich zum Beispiel bei Türen oder Duschkabinen sind Maße von ca. 2 x 1 m typisch. Als konstruktive Bestandteile in Küchenmöbeln oder -geräten orientieren sich die Abmessungen am Küchen-Zeilenmaß von 50 oder 60 cm Breite. Frontscheiben oder Blenden in Küchengeräten wie z. B. Backofentüren oder in elektronischen Geräten orientieren sich am jeweiligen Design.

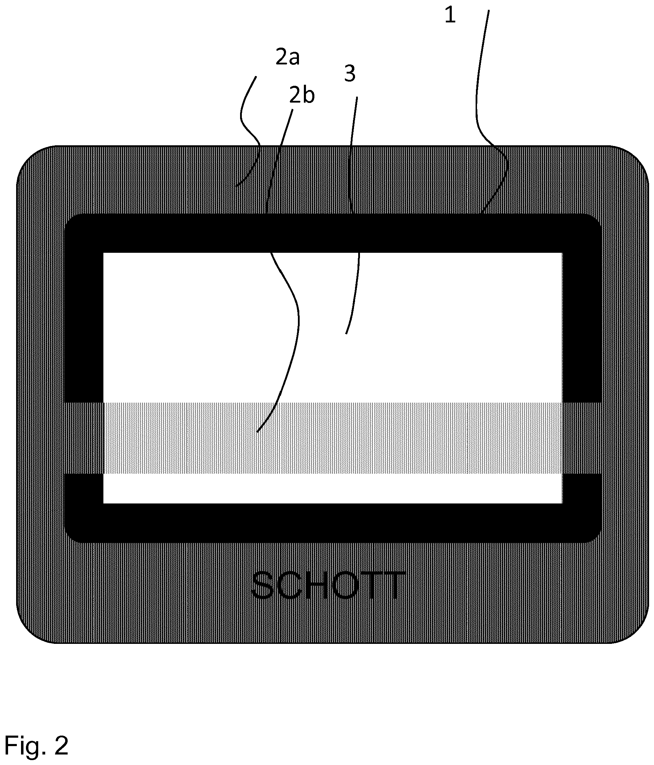

Die Beschichtung mit Antisticking-Eigenschaften ist in einer bevorzugten Ausführung so ausgebildet, dass durch die Wahl (Menge, Größe, Form) der strukturbildenden Partikel das Aussehen eines geätzten oder sandgestrahlten Substrats imitiert wird. Um dieses optische Erscheinungsbild einer seidenglänzenden/satinierten Oberfläche zu charakterisieren, können drei Größen im Vergleich zu geätzten oder sandgestrahlten Oberflächen herangezogen werden: der durch die Beschichtung hervorgerufene zusätzliche Transmissionsverlust im Vergleich zu einem unbehandelten Substrat, der HAZE-Wert als Maß für die Streuung und der Glanz-Wert (Clearity), der ein Maß für die Reflexion ist. Charakteristische und bevorzugte Werte sind für den Transmissionsverlust durch die Beschichtung 3 bis 20 % und HAZE-Werte um 50 bis 97 %. Die Glanz-Werte sind für das Aussehen weniger charakteristisch und liegen zwischen 4 und 50 %. Üblicherweise liegt ein geätztes oder sandgestrahltes Referenzmuster vor, das mit der erfindungsgemäßen Beschichtung imitiert wird. Bei einer bevorzugten Ausführungsform ist das Substratmaterial selber transparent mit einer Lichttransmission von Y > 80 %. Weiter bevorzugt ist dabei eine Ausführungsform, bei der die gegenüberliegende Seite eine anorganische Beschichtung besitzt, die mit Pigmenten eingefärbt ist. Über das Zusammenspiel von der Seite mit Imitierung einer geätzten bzw. sandgestrahlten Schicht und der durchscheinenden gefärbten Beschichtung ergeben sich für das Design vielfältige und ansprechende Gestaltungsmöglichkeiten. So sind die beiden Beschichtungen vorzugsweise nicht deckungsgleich, sondern es gibt Bereiche, bei denen nur die gefärbte Beschichtung sichtbar ist und nicht durch die Beschichtung mit imitierter Ätzoptik verdeckt wird oder umgekehrt. In die Beschichtung lassen sich Logos und Symbole z.B. für Bedienfunktionen oder markenspezifische Bezeichnungen integrieren, indem Beschichtungen ausgespart werden oder diese Bereiche durch Dekorieren hervorgehoben werden. Die Zeichnung Fig. 2 zeigt ein Beispiel für eine Ausführung.

Es ist also eine Ausführung vorteilhaft, wenn mindestens eine Seite des Substrats eine Beschichtung hat, die mit Pigmenten eingefärbt ist. Durch die geschilderten Unter- und Überdeckungen mit der Beschichtung auf der anderen Seite ergeben sich vielfältige Gestaltungsmöglichkeiten, wobei die zweite Beschichtung ebenfalls über Pigmente eingefärbt sein kann oder ohne Pigmente beispielsweise das Aussehen geätzter oder sandgestrahlter Oberflächen imitiert. Auch Beschichtungen, die über Effektpigmente oder andere Zusätze ein metallisches Aussehen entwickeln sind möglich. Durch Zusätze, die den Brechungsindex der Schicht herabsetzen oder die Reflexion der Oberfläche vermindern, sind Schichten mit entspiegelnden oder Antireflexionseigenschaften darstellbar.

Bei Glaskeramikscheiben als Substrat kann es beispielsweise vorteilhaft sein, die eine Seite wie üblich mit Emaille-Farben, die Pigmente enthalten, zu dekorieren und dabei die Heizzonen und Bedienungselemente hervorzuheben und die Unterseite mit einer farbigen Unterseitenbeschichtung zu versehen.

Dabei muss mindestens eine Seite, über Zugabe strukturbildender Partikel, Antisticking-Eigenschaften besitzen.
Um besonders opake oder farbintensive Beschichtungen zu erzielen ist es vorteilhaft, wenn die strukturbildenden Partikel selbst gefärbt sind oder aus Pigmenten bestehen. Alternativ ist die gefärbte Schicht auch aus mehreren Schichtlagen aufgebaut. Dabei ist es vorteilhaft, wenn die erste Schicht mit Pigmenten versetzt ist und die oberste Schicht die strukturbildenden Partikel für die Antisticking-Eigenschaften enthält. Damit die strukturbildenden Partikel beim Erwärmen (z.B. Einbrand) nicht zu tief in die darunter liegenden Schichten einsinken, ist es vorteilhaft, wenn die Erweichungstemperatur des Glaspulvers (schichtbildenden Glaskomponente) in der obersten Schicht geringer ist als die Erweichungstemperatur der darunter liegenden Schicht.

Bei der Gestaltung ist es ebenso möglich, beschichtete Bereiche zu strukturieren und Teile bei der Beschichtung auszulassen oder auf einer Seite verschiedene Beschichtungen, z.B. mit unterschiedlichen Pigmenten, zu kombinieren.
Unter den strukturierten Bereichen lassen sich beispielsweise Anzeigeelemente oder andere technische Vorrichtungen in das System integrieren. Die Anzeigeelemente können aus mono- und polychromatischen Lichtquellen meist LEDs bestehen und in verschiedenen Farben wie blau, grün, gelb, orange, rot und weiß leuchten. Auch farbige Bildschirme/Displays sind möglich.

Bei dem Verfahren zur Herstellung eines Substrats mit beidseitiger Beschichtung wird zunächst eine Beschichtung mit Antisticking-Eigenschaften aufgebracht und eingebrannt. Beim Erwärmen (z.B. Einbrand) liegt diese Seite oben und hat keinen Kontakt mit der Unterlage. Durch den Zusatz strukturbildender Partikel bilden sich Erhebungen, die als Abstandshalter wirken. In einem nachfolgenden Schritt wird eine Beschichtung mit oder ohne Antisticking-Eigenschaften auf der gegenüberliegenden Seite des Substrats aufgebracht und erwärmt (z.B. eingebrannt), wobei diese Seite ebenfalls oben liegt und keinen Kontakt mit der Unterlage hat. Die vorher eingebrannte Beschichtung mit Antisticking-Eigenschaften liegt dabei nach unten und bewerkstelligt den Kontakt mit dem keramischen Unterlagenmaterial ohne dass die Beschichtung anklebt und verletzt wird.

Bei den Unterlagen handelt es sich üblicherweise um keramische Brennhilfsmittel wie z.B. planare Scheiben aus Keramik oder einem Hartglas wie dem SCHOTT-Produkt Quarzal (> 98 Gew.-% SiO₂). Meist sind diese Unterlagenplatten über Sintern hergestellt und verfügen über eine gewisse Porosität. Alternativ können z.B. auch Unterlagenplatten aus Glaskeramik eingesetzt werden. In Erwärmungsöfen (z.B. Einbrennöfen), die mit Rollen ausgestattet sind, kann auch ohne Unterlagenplatten gearbeitet werden, in dem das Brenngut direkt auf den Rollen transportiert wird. Die Rollen bestehen meist ebenfalls aus keramischen, glaskeramischen, glasigen oder faserkeramischen Werkstoffen.

Die weiteren Prozessschritte orientieren sich am Stand der Technik. Die Zusammensetzungen der Glaspulver (schichtbildenden Glaskomponenten) werden in üblicher Weise aus Rohstoffen bei Temperaturen um 1450°C erschmolzen. Die Glasschmelzen werden in Wasser oder zwischen gekühlten Metallwalzen abgeschreckt und zu einem Glaspulver vermahlen. Die mittlere Korngrößenverteilung d₅₀ liegt zwischen 0,5 und 15 µm, bevorzugt zwischen 1 bis 4 µm. Trockenmahlverfahren eignen sich besonders, um unerwünschte Agglomeratbildung des Glaspulvers beim Trocknen des Mahlschlickers wie bei Nassmahlung erforderlich zu vermeiden.

Die so erhaltenen Glaspulver werden mit den strukturbildenden Partikeln und ggf. weiteren Pigmenten, keramischen Füllstoffen und Mattierungszusätzen vermischt. Je nach Beschichtungsverfahren werden verschiedene organische Hilfsmittel zugesetzt, die sich beim Erwärmen (z.B. Einbrand) verflüchtigen. Die Beschichtung kann trocken, auf pulverelektrostatischem Weg oder im Flüssigauftrag über Siebdruck, Tampondruck, Nassabziehbild, Sprühen oder neuerdings auch Tintenstrahldruck erfolgen.
Im Rahmen der Erfindung werden die Substrate bevorzugt über ein Siebdruckverfahren beschichtet. Dabei wird die Pulvermischung durch Zugabe eines Siebdrucköls in die für den Siebdruck benötigte Viskosität gebracht. Die Homogenisierung der erhaltenen Paste erfolgt über einen Dreiwalzenstuhl. Die Maschenweite des verwendeten Siebes bestimmt zusammen mit dem Ölanteil und den Pulverdichten die Schichtdicke nach dem Erwärmen (z.B. Einbrand).

Das Erwärmen (z.B. Einbrand) der Beschichtungen erfolgt bevorzugt in einem Rollenofen entsprechend dem erfindungsgemäßen Verfahren. Die Seite mit der neuen Beschichtung liegt oben und die Scheibe wird entweder direkt auf den Rollen oder auf der Unterlagenplatte liegend im Rollenofen weiter transportiert. Wenn das Substratmaterial aus Glas besteht, wird das Erwärmen (z.B. Einbrand) bevorzugt in einem thermischen Vorspannofen durchgeführt, um die Festigkeit der Scheiben zu erhöhen. Insbesondere für gefloatete Kalknatron- und Borofloatscheiben wird dies vorzugsweise so durchgeführt.

Das zweite schichtbildende Material umfasst ebenfalls eine Glaskomponente und besteht vorzugsweise aus einer anorganischen glasbasierten Beschichtung, auch als Emaille bezeichnet.

In bevorzugter Ausführungsform bestehen die Schichtmaterialien auf beiden Seiten des Substrats aus anorganischen glasbasierten Emaille-Schichten. Die beschriebenen Vorteile einer glasbasierten anorganischen Emaille-Beschichtung sind somit nach dem Einbrand auf beiden Seiten realisiert.

Da die zweite Beschichtung oben liegt und keinen Kontakt mit der Unterlage hat, ist der Zusatz strukturbildender Partikel nicht zwingend erforderlich. Mittlere Korngrößen des Glaspulvers liegen ebenfalls zwischen 0,5 und 15 µm und die Einbrenntemperatur muss oberhalb der Erweichungstemperatur liegen. Es sind gebräuchliche Emaille-Farben oder reine Glaspulver einsetzbar, die auf das Substrat angepasst sind.

Die Erweichungstemperatur der Glaskomponente in der zweiten Schicht soll bevorzugt mindestens 500 °C und weiter bevorzugt mindestens 600 °C betragen. Höhere Erweichungstemperaturen sind vorteilhaft für die Glaseigenschaften, wie chemische Beständigkeit, Glanz, Abrieb- und Kratzfestigkeit sowie thermische Beständigkeit.

Dies gilt bevorzugt auch für die Erweichungstemperatur der Glaskomponente in der erste Schicht.

Um auf beiden Seiten günstige Schichteigenschaften zu erreichen, ist es vorteilhaft, wenn sich die Erweichungstemperaturen der Glaskomponenten auf beiden Seiten des Substrats um weniger als 200 °C, bevorzugt weniger als 100 °C unterschieden.
Bevorzugt liegt die Erweichungstemperatur der Glaskomponente in der zweiten Beschichtung nicht mehr als 50 °C über der der ersten Beschichtung, weil sonst die Glaskomponente in der aufliegenden Beschichtung zu flüssig wird und die strukturbildenden Partikel nicht mehr hinreichend fixiert werden. Dies kann zum Abplatzen der Partikel führen und die Vermeidung der Haftung gefährden. In einer vorteilhaften Ausführung sind das erste und das zweite schichtbildende Material gleich. Hierdurch ergeben sich logistische Vorteile.

Vorzugsweise wird das erfindungsgemäß hergestellte beschichtete Substrat oder das scheibenförmige Substrat bestehend aus thermisch vorgespannten gefloateten Kalk-Natron-Glas als Sichtscheibe in einem Küchenofen oder als Frontscheibe in Küchengeräten oder Möbeln, Frontscheibe von elektrischen Geräten, sowie als Scheibenelement in der Innen- und Außenarchitektur verwendet werden. Beispiele für diese Verwendungen sind Vorsatzscheiben in Backöfen, Dunstabzugshauben, Mikrowellengeräten, Kaffeautomaten, Türen, Duschkabinen.

Vorzugsweise kann das erfindungsgemäß hergestellte beschichtete Substrat oder das scheibenförmige Substrat bestehend aus gefloateten Borosilikatglas als Sichtscheibe in einem Kamin oder Küchenofen oder Bestandteil in einem Sicherheitsglaslaminat mit Polymerzwischenlagen verwendet werden. Ein Beispiel für ein solches Substrat ist das gefloatete BOROFLOAT® der Firma SCHOTT AG, das es in den Varianten BOROFLOAT® 3.3 und BOROFLOAT® 4.0 gibt. Bei den Sichtscheiben für Küchenofen werden insbesondere solche mit Pyrolysereinigung vorteilhaft bedient.

Vorzugsweise kann das erfindungsgemäß hergestellte beschichtete Substrat oder das scheibenförmige Substrat bestehend aus LAS-Glaskeramik als Kochfläche oder Sichtscheibe in einem Kamin oder Küchenofen sowie als Kochfläche verwendet werden. Die Scheibe ist vorzugsweise transparent mit einer Lichttransmission größer als 80 %. Bei den Küchenöfen sind insbesondere solche mit Pyrolysereinigung ausgestattet. Bei der Verwendung als Kochfläche wird die Durchsicht auf die technischen Einbauten durch eine blickdichte Unterseitenbeschichtung verhindert und Aussparungen in der Beschichtung gestatten das Anbringen von Anzeigen und Displays.

Die vorliegende Erfindung wird anhand der folgenden Beispiele weiter verdeutlicht.

Zur Herstellung des Glaspulvers für die schichtbildende Glaskomponente wurden die Glaszusammensetzungen aus in der Glasindustrie üblichen Rohstoffen bei Temperaturen von ca. 1450°C, 4 Stunden in Platintiegel eingeschmolzen und durch Rühren homogenisiert. Die Glasschmelzen werden zwischen wassergekühlten Edelstahlwalzen abgeschreckt und die erhaltenen Glasstücke werden weiter auf eine mittlere Korngröße d₅₀ von 1,5 µm aufgemahlen.

Für die Gläser sind in Tabelle 1 Zusammensetzungen und Eigenschaften wie Dichte, Transformationstemperatur Tg, Erweichungstemperatur Ew und die thermische Ausdehnung zwischen 20°C und 300°C aufgeführt.

Tabelle 2 zeigt Beispiele für strukturbildende Partikel, deren Hersteller und Eigenschaften. Bei einigen Beispielen wurden organische oder teilorganische Vorstufen von SiO₂-Kugeln (Partikel Nr. 1, 3 aus Tabelle 2) verwendet. Davon wurden, wie in Tabelle 3 dargestellt, diese teilweise vorher erhitzt (Vermerk "ausgeglüht" in Tab. 3), um die organischen Bestandteile zu entfernen. Bei der Behandlung wurden die Kugeln in einer keramischen Schale in einem Ofen in 30 min auf 400 °C erhitzt und 16h gehalten. Die Schütthöhe der Kugeln in der keramischen Schale betrug 1 cm, um einen guten Zutritt von Sauerstoff zu gewährleisten.

In der Tabelle 3 sind Beispiele für erfindungsgemäße Verfahren und Substrate und Vergleichsbeispiel(e) 23 bis 26 dargestellt. Bei den Substratmaterialien wurden neben handelsüblichen gefloateten Kalknatronglasscheiben, gefloateten Borosilikatglascheiben (z.B. BOROFLOAT® 3.3 der Firma SCHOTT AG) auch Glaskeramikscheiben und Grünglascheiben (die in Glaskeramikscheiben umwandelbar sind) verwendet. Beispiele für transparente Lithium-Aluminium-Silikat-Glaskeramikscheiben, z.B. die Glaskeramik 8732 der Firma SCHOTT AG ist in der Schrift DE 10 2012 202 697 A1 offenbart.
Zu Vergleichszwecken (Beispiel 26) wurde eine mit Flusssäure geätzte Scheibe aus einem Kalknatronglas mit seiner Oberfläche gegenüber gestellt. Bei dem Vergleichsbeispiel 25 wurde die erste Schicht ohne strukturbildende Partikel ausgebildet. Im Labortest zeigt sich eine starke Haftung auf den Unterlagsplattenmaterialien. Teile der Email-Schicht sind aus dem Substrat herausgerissen und haften auf der Unterlage. Bei der Hochquarz-Glaskeramik als Unterlage zeigt das beschichtete Substrat darüber hinaus eine Rissbildung. Die Vergleichsbeispiele 23 und 24 enthalten Kugeln aus SiO₂ mit geringer mittlerer Größe von 0,35 µm. Aufgrund ihrer geringen Größe werden sie leichter von der schichtbildenden Glaskomponente umschlossen und eingebettet. Damit sind sie bei der hier realisierten mittleren Dicke der Glasschicht von größer als 1 µm zwischen den Partikeln nicht als Erhebung wirksam. Zusätze dieser Größe sind zur Verminderung der Reflexion und Entspiegelung wie bei der zweiten Schicht von Beispiel 22 eingesetzt. Die Zugabe von 0,3 Vol.% strukturbildenden Partikeln in Vergleichsbeispiel 23 war bei der empfindlichen Unterlage NEXTREMA® transparent nicht ausreichend um eine Schädigung vollständig zu vermeiden.

Die aufgeführten Substratmaterialien wurden als Scheiben der Dimensionen 340 x 240 x 4 mm für die Beschichtungen präpariert. Diese Größe eignet sich sowohl für Einbrände im Labor- als auch im Fertigungsofen. Die Pulver für die zwei Beschichtungen wurden gemäß Tabelle 3 gemischt und mit Siebdrucköl versetzt. Dabei wurde zunächst das Glaspulver und ggf. Pigment mit dem Siebdrucköl gemischt und in einem Dreiwalzenstuhl homogenisiert. Die strukturbildenden Partikel wurden anschließend zugesetzt und durch Rühren in einem Dispermat wurde die Paste gemischt. Das Anpastverhältnis und das Siebgewebe bedingen die Schichtdicke beim Siebdruck. Die Substrate wurden vollflächig bedruckt und bei 180 °C, 30 min getrocknet.
Die Einbrände mit den angegebenen Maximaltemperaturen und Haltezeiten erfolgten wie angegeben im Labor- oder Fertigungsofen. Beim Laboreinbrand wurde ein Kammerofen mit Unterlagsplatte aus gesintertem Kieselglas auf die angegebene Temperatur erhitzt und die beschichtete Scheibe eingelegt. Das Substrat mit eingebrannter Beschichtung wurde nach der angegebenen Haltezeit heiß entnommen und in einem zweiten Kammerofen bei 540 °C, 15 min entspannt und auf Raumtemperatur abgekühlt. Beim Einbrand der ersten Schicht lag diese nach oben ohne Kontakt mit der Unterlage.
Vor dem Einbrand der zweiten Schicht wurde die Wirksamkeit der ersten Schicht bezüglich Vermeidung von Haftung/Antisticking getestet. Dazu wurden die beschichteten Substrate in Stücke der Maße ca. 5 x 5 cm unterteilt und mit der ersten eingebrannten Schicht nach unten auf verschiedenen Unterlagen im Laborofen in 40 min auf 680 °C, 5 min Haltezeit erhitzt. Das Abkühlen erfolgte mit 10 °C/min bis 300 °C dann mit Ofenkennlinie. Es wurde an fünf verschiedenen Unterlagsplattenmaterialien getestet:
- Gesintertes Kieselglas, QUARZAL
- Isoplan 1000, Frenzelit,
- Keatit-Glaskeramik, gewalzte Oberfläche
- Keatit-Glaskeramik, sandgestrahlte Oberfläche
- Hochquarz-Glaskeramik, gewalzte Oberfläche

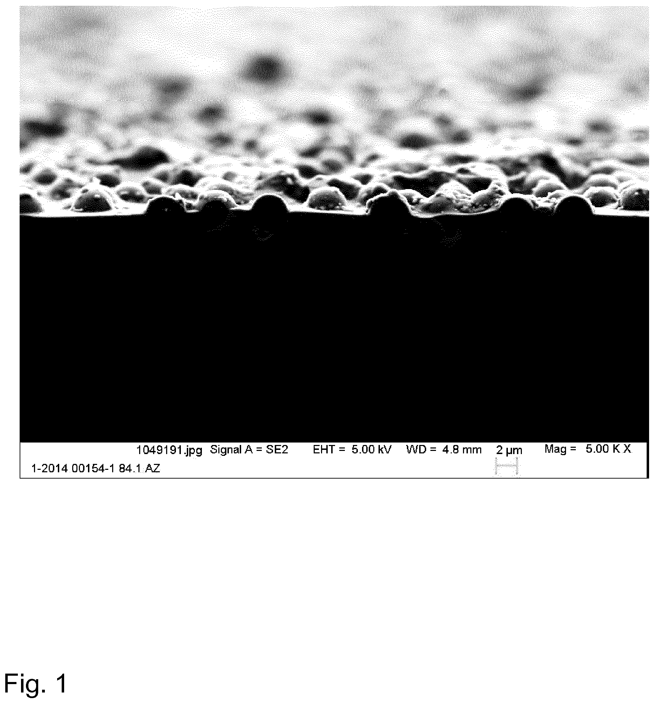

Als Keatit-Glaskeramik-Unterlage wurde die Glaskeramik NEXTREMA® opaque white der Firma SCHOTT AG verwendet und als Hochquarz-Glaskeramik NEXTREMA® transparent. Bei den Beispielen 1 und 2 aus Tabelle 3 wurden die ersten vier Unterlagsplattenmaterialien beim Test eingesetzt. Alle weiteren Beispiele wurden mit QUARZAL und NEXTREMA® transparent getestet. Es hatte sich gezeigt, dass das letzte Material besonders empfindlich bzgl. Anhaften reagiert und deswegen gut für den Test geeignet ist. Das erste Material QUARZAL ist für Aussagen zu gesinterten Unterlagsplattenmaterialien vorteilhaft. Wenn sich an keiner der Unterlagsplattenmaterialien Schädigungen durch Kleben oder Anhaften zeigte, wurden die Substrate mit den Beschichtungen für den zweiten Einbrand im Labor oder in der Fertigung freigegeben.
Das zweite schichtbildende Material umfasst ein Schwarzpigment, das vollflächig auf die zweite Seite des Substrats mittels Siebdruck aufgebracht und eingebrannt wurde. Randliche Bereiche des Substrats wurden ohne gegenüberliegende Schichten bedruckt.
Bei den Fertigungsöfen handelt es sich um Rollenöfen bei denen das Substrat auf keramischen Rollen transportiert wird. Bei den Substratmaterialien aus Glas wurden bevorzugt Fertigungsöfen eingesetzt, bei denen nach dem Einbrennen der zweiten Schicht das Glassubstrat thermisch vorgespannt wurde. Die Bewertung der nach unten liegenden ersten Beschichtung auf Qualität (keine Schädigung, abgeplatzte Schichtbereiche) zeigt die Wirksamkeit des erfindungsgemäßen Verfahrens auf (s. Tabelle 3).
Tabelle 3 zeigt auch die Oberflächenstrukturen der Schichten mit strukturbildenden Partikeln, wie z. B. Partikelabstand und -erhebungen, sowie Dicke der Glasschicht und Flächenbelegungsgrade. Diese wurden aus Licht- und Elektronenmikroskop-Aufnahmen der Schichten in Aufsicht und quer an Bruchkanten bestimmt. Dabei wurde an mehreren verschiedenen Stellen der Probe (insgesamt 10 Bereiche) die Auswertung vorgenommen. Figur 1 zeigt eine Elektronenmikroskop-Aufnahme der Bruchkante des Substrats mit der die strukturbildenden Partikel enthaltenden ersten Schicht von Beispiel 4 aus Tabelle 3.
Die Rauigkeitswerte der Schichten wurden mit einem Weißlichtinterferometer der Firma Zygo bestimmt. Die rechteckige Messfläche wurde entsprechend der jeweiligen Oberflächenstruktur optimiert, wobei die Kantenlängen des Rechtecks auf 200 bis 600 µm eingestellt wurden.
Die optischen Größen Transmission, HAZE-Wert und Glanz wurden mit dem Gerät Haze-gard Plus der Firma BYK Gardner entsprechend den Normen ASTM D-1003 und ASTM D-1044 bestimmt. Es wird an solchen Bereichen des Substrats bzw. herauspräparierten Stücken gemessen, die nur über die erste Beschichtung ohne Hinterdruckung mit der zweiten Schicht verfügen.
Figur 2 zeigt ein scheibenförmiges Substrat mit beidseitig aufgebrachten Schichten mit Blick auf die Seite mit der ersten Beschichtung. Die erste Schicht enthält strukturbildende Partikel, und es gibt Substratbereiche bei denen die zweite Schicht hinterdruckt ist (2a) und solche bei denen das Substrat auf der gegenüberliegenden Seite keine zweite Beschichtung aufweist (2b). Im Bereich 1 des Substrats und dem Firmenlogo ist nur die zweite Beschichtung aufgebracht, der Bereich (3) ist auf beiden Seiten ohne Beschichtung. Das Bild zeigt die vielfältigen Möglichkeiten der Ausführung im Hinblick auf das Design.
In einem Beispiel ist die Ausführung nach Fig. 2 eine 4 mm dicke Kalk-Natron Glasscheibe für die Verwendung als Backofen-Sichtscheibe mit einer ersten Schicht, gemäß Beispiel 8, die vom Aussehen einer geätzten Oberfläche entspricht und die zweite Beschichtung entspricht ebenfalls Beispiel 8 mit einer schwarz pigmentierten Email-Schicht. Die Scheibe ist im Fertigungsofen thermisch vorgespannt und die Prüfung der Festigkeit im Test nach Krümelbruch genügt den Forderungen der DIN EN 60335-2-6 nach einer Krümelzahl von größer 60 Stück in einer beliebigen Fläche von 50x50 mm.
Bei einem weiteren Beispiel wird eine 4 mm dicke BOROFLOAT® 3.3 Scheibe, gemäß Beispiel 19 aus Tabelle 3 in der dargestellten Ausführung, beidseitig bedruckt.

**Tabelle 1: Zusammensetzungen von Gläsern und Eigenschaften der Gläser, aus denen die Glaspulver erhalten wurden**

| Glas Nr. | | 1 | 2 | 3 | 4 | 5 |
|---|---|---|---|---|---|---|
| Zusammensetzung | Gew. % | | | | | |
| Li₂O | | 1,3 | 4,0 | | 3,1 | 4,4 |
| Na₂O | | | 10,0 | 18,8 | | 0,2 |
| K₂O | | 0,5 | | 0,0 | | |
| MgO | | 0,1 | 1,0 | | 1,7 | |
| CaO | | 0,2 | 3,0 | 0,9 | 2,0 | |
| SrO | | | | | 2,3 | |
| BaO | | | | | | |
| ZnO | | 0,1 | 8,0 | 8,5 | 2,2 | |
| B₂O₃ | | 7,2 | 18,0 | 13,1 | 16,7 | 23,1 |
| Al₂O₃ | | 3,3 | 5,0 | 1,0 | 16,6 | 5,9 |
| SiO₂ | | 21,2 | 50,0 | 50,9 | 54,3 | 57,0 |
| P₂O₅ | | | | | | |
| TiO₂ | | 0,1 | 1,0 | 6,3 | | |
| ZrO₂ | | 2,0 | | 0,5 | 1,1 | |
| SnO₂ | | | | | | |
| Bi₂O₃ | | 64,0 | | | | 9,4 |
| Eigenschaften glasig | | | | | | |
| Transformationstemperatur | °C | 445 | 490 | 536 | 578 | 478 |
| Erweichungstemperatur Ew (10^{7,6} dPas) | °C | 548 | 594 | 644 | 755 | 698 |
| Thermische Ausdehnung α_{20/300} | 10⁻⁶/K | 7,3 | 8,6 | 9,70 | 4,4 | 4,8 |
| Dichte | g/cm³ | 4,52 | 2,48 | 2,69 | 2,41 | 2,43 |

**Tabelle 2: Beispiele für strukturbildende Partikel, Hersteller und Eigenschaften**

| Partikel Nr. | Material | Bezeichnung | Hersteller | Partikelform | Mittlere Größe (µm) |
|---|---|---|---|---|---|
| 1 | Polymethylsilsesquioxan | Tospearl 145 A | Momentive Performance Materials GmbH | Kugeln | 4,5 |
| 2 | Polymethylsilsesquioxan | E+580 | Coating Products | Kugeln | 8 |
| 3 | Polymethylsilsesquioxan | E+715 | Coating Products | Kugeln | 15 |
| 4 | Alkaliarmes Borosilikatglas | W 210 | 3M | Kugeln | 3 |
| 5 | Alkalialumosilikatglas | W 410 | 3M | Kugeln | 4 |
| 6 | Aluminiumoxid | Alumina microbeads | RSA LE RUBIS SA | Kugeln | 50 |
| 7 | Keramik (SiO₂ - Al₂O₃) | Zeeospheres ceramic microspheres, Grade G-200 | Zeeospheres Ceramics, LLC | Kugeln | 5 |
| 8 | Keramik (SiO₂ - Al₂O₃) | Zeeospheres ceramic microspheres, Grade N-400 | Zeeospheres Ceramics, LLC | Kugeln | 8 |
| 9 | α-Aluminiumoxid | Plain Al₂O₃ microspheres, C-ALU-3.5 | Microspheres-Nanospheres, Corpuscular Inc. | Kugeln | 4 |
| 10 | Titandioxid | Plain TiO₂ microspheres, C-TIO-5 | Microspheres-Nanospheres, Corpuscular Inc. | Kugeln | 5 |
| 11 | Borosilikatglas | Spheriglass Solid Glass Microsperes, Grade 500 | Potters Industries LLC | Kugeln | 5 |
| 12 | Lithiumaluminiumsilikat-Glaskeramik | Negative CTE filler, DL-7300, standard size | Nippon Electric Glass CO, Ltd. | Kugeln | 4 |
| 13 | Lithiumaluminiumsilikat-Glaskeramik | Negative CTE filler, DL-7400, standard size | Nippon Electric Glass CO, Ltd. | Kugeln | 4 |
| 14 | Zirkonsilikat | Zirkonsilikatmehl | Europe Minerals | Kornform | 3 |
| 15 | Kolloidales SiO₂ | Quartron SP-03F | Fuso Chemicals CO., Ltd. | Kugeln | 0,35 |
| 16 | Kolloidales SiO₂ | Quartron PL-20 | Fuso Chemicals CO., Ltd. | Kugeln | 0,22 |
| 17 | Kalk-Natronglas | Unibeads SPL-30 | Unitika Ltd. | Kugeln | 30 |
| 18 | Titan Barium Glas | Unibeads SPM-16 | Unitika Ltd. | Kugeln | 16 |
| 19 | Alkaliarmes Glas | EMB-20 | Potters-Ballotini Co., Ltd. | Kugeln | 10 |

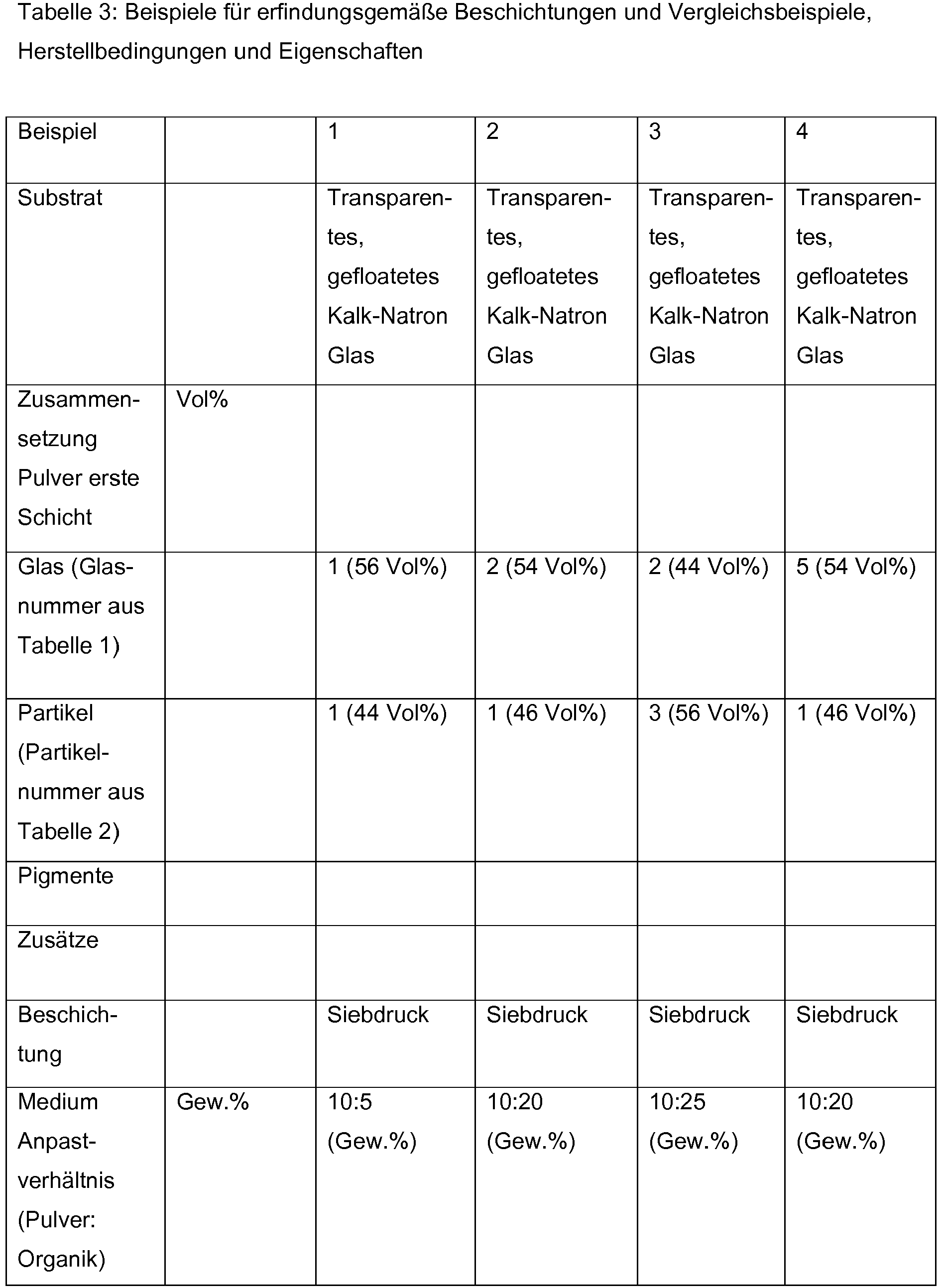

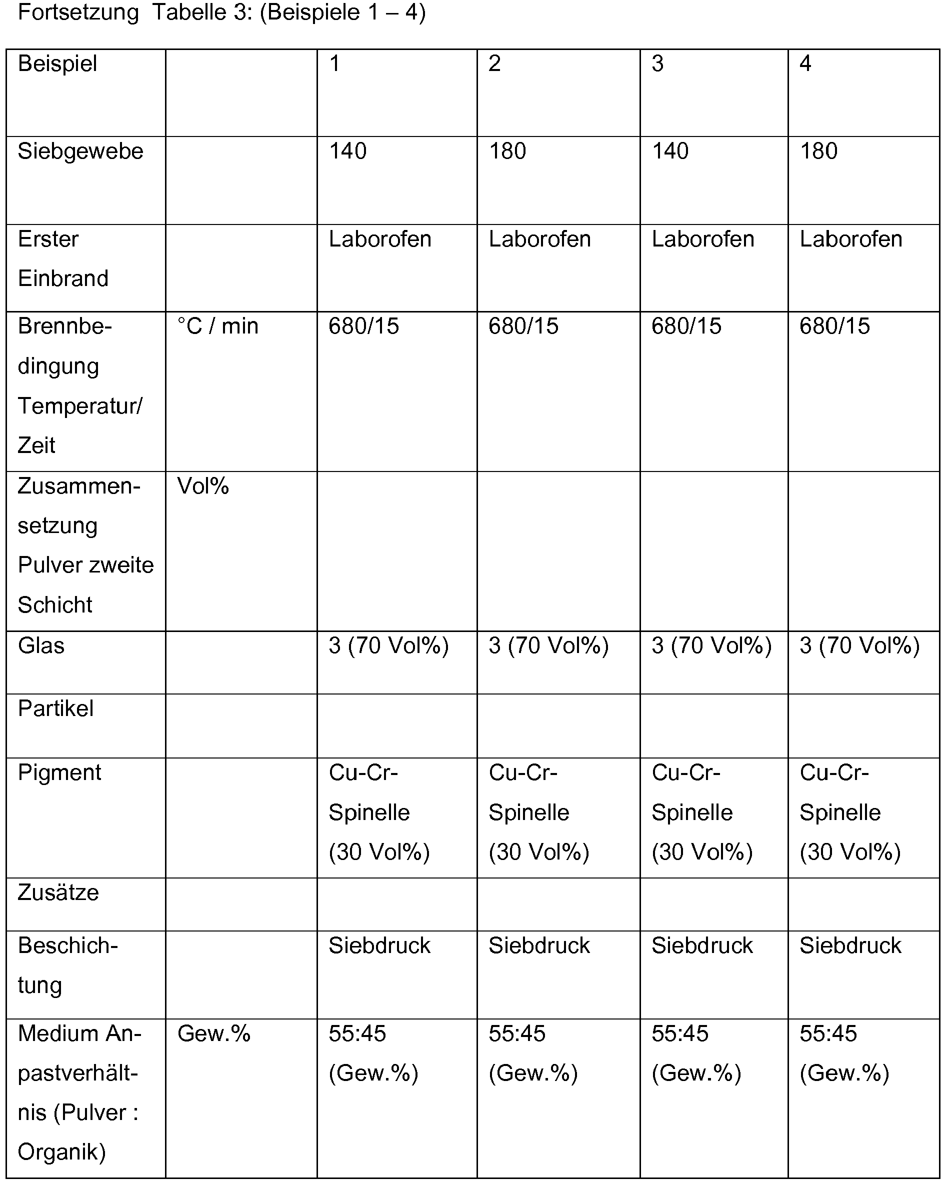

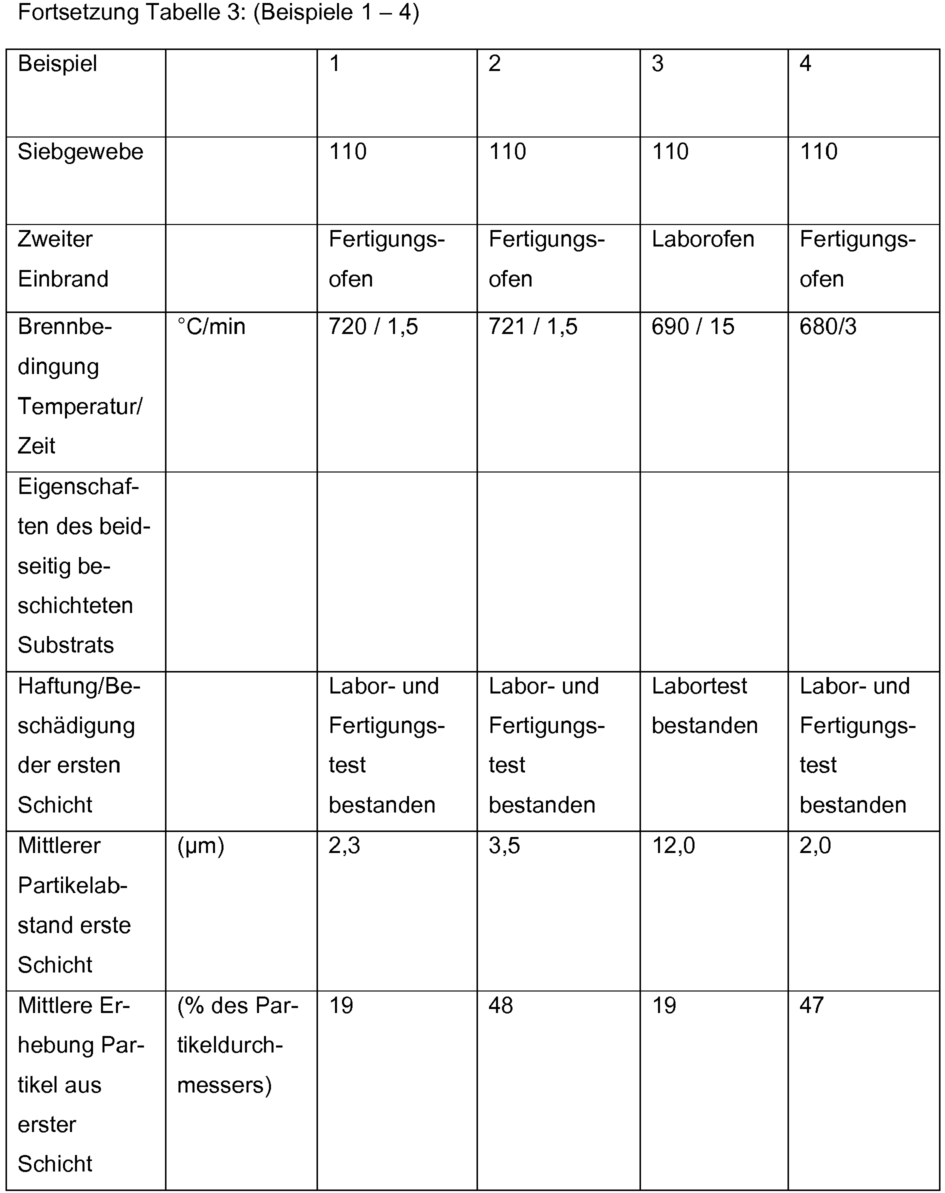

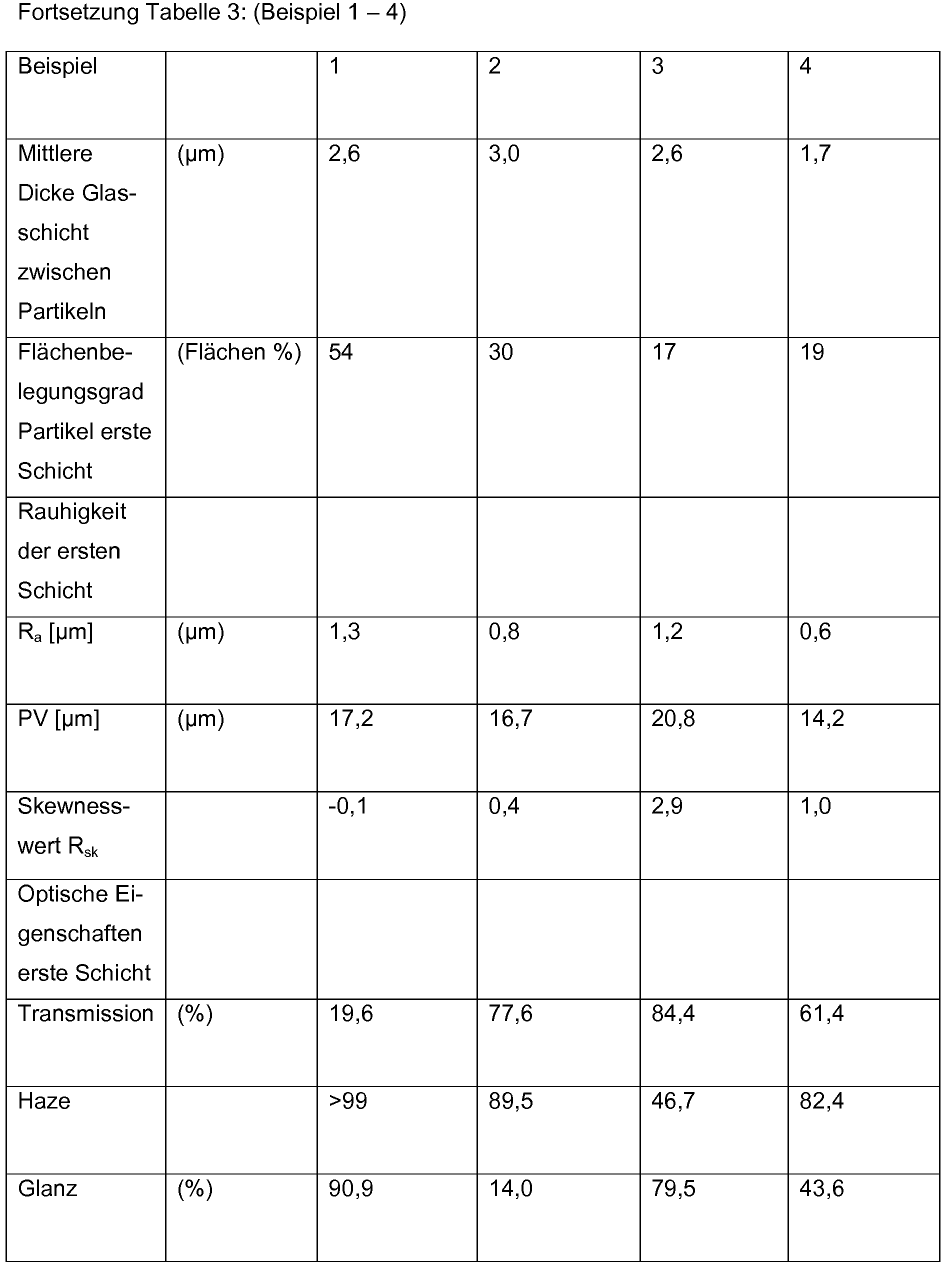

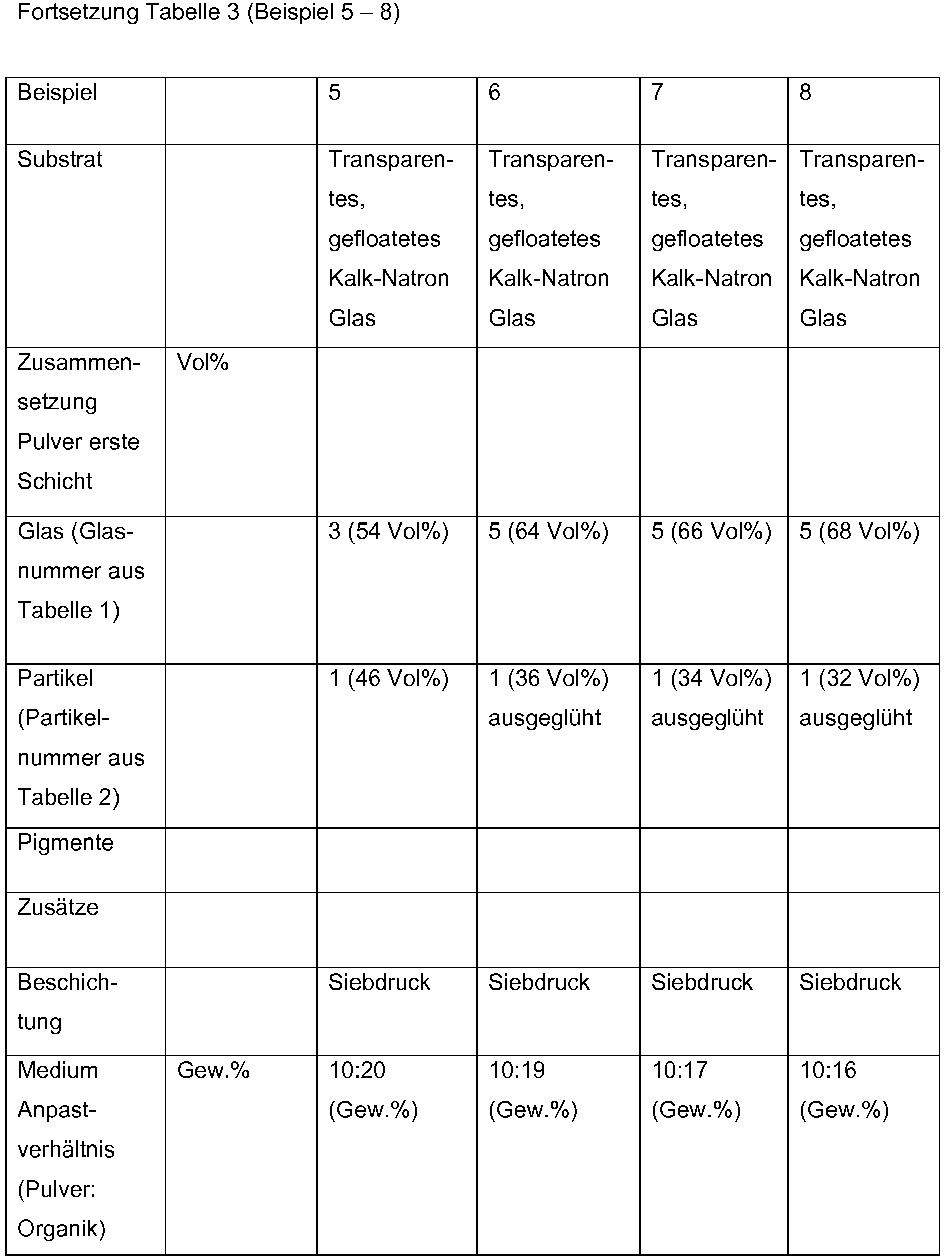

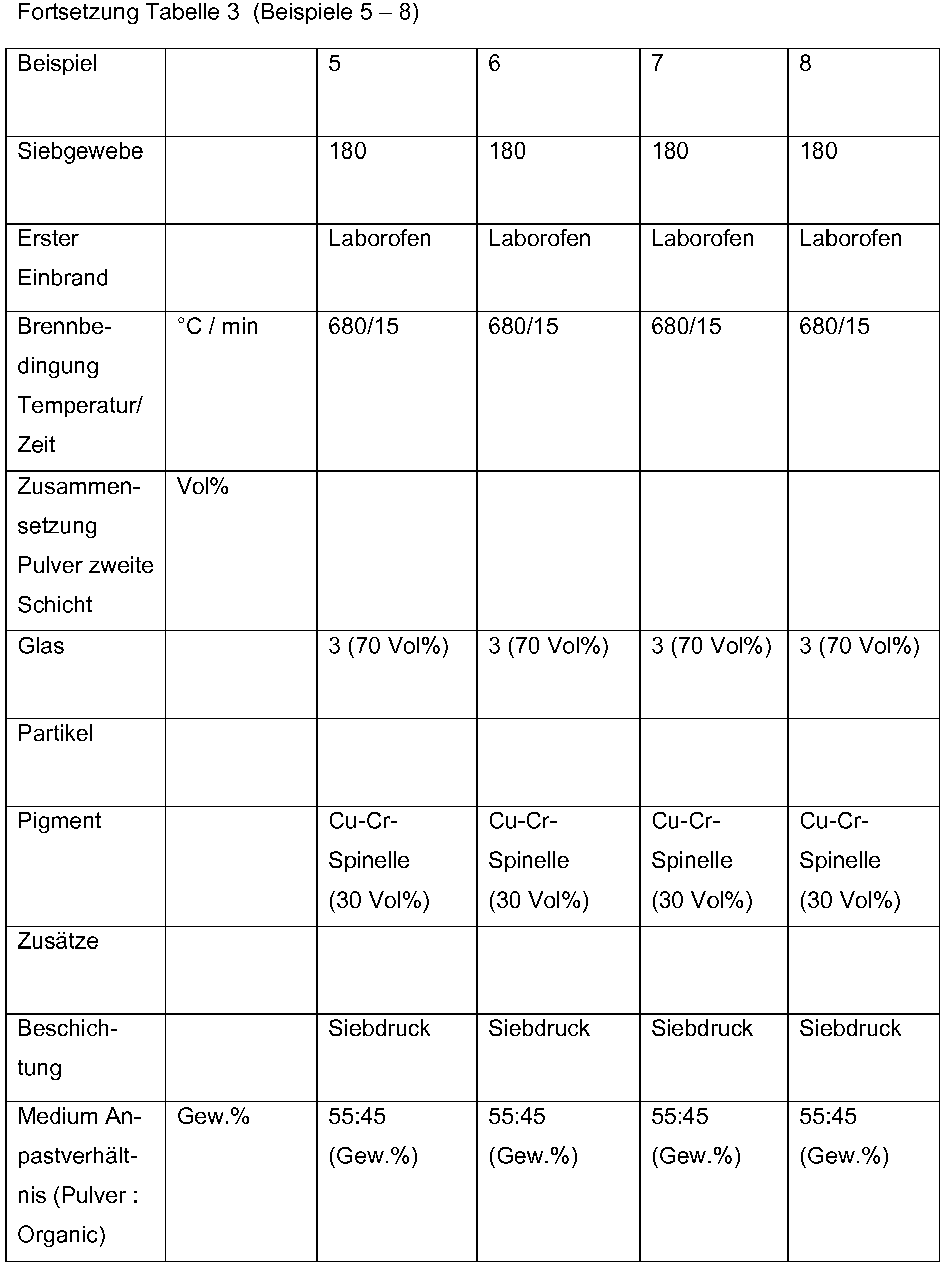

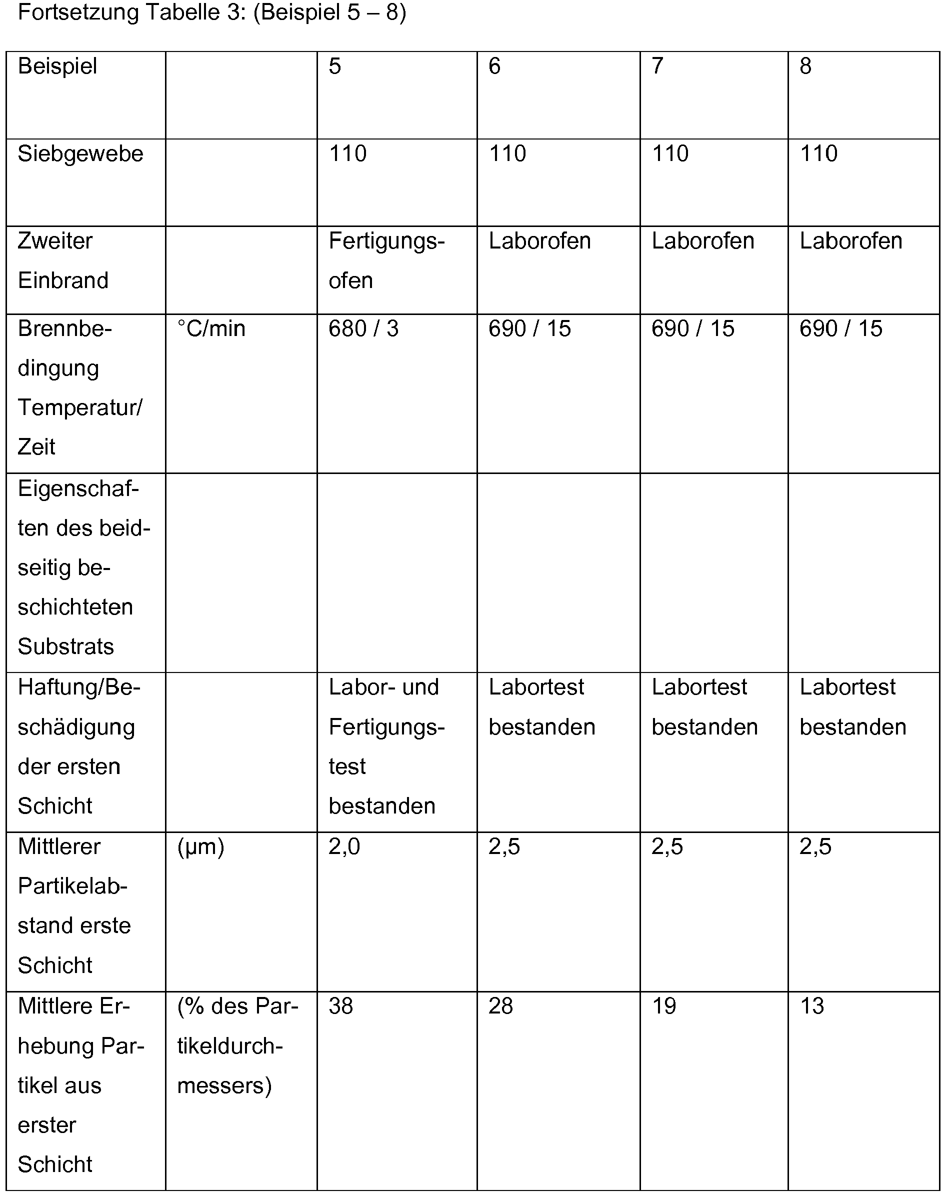

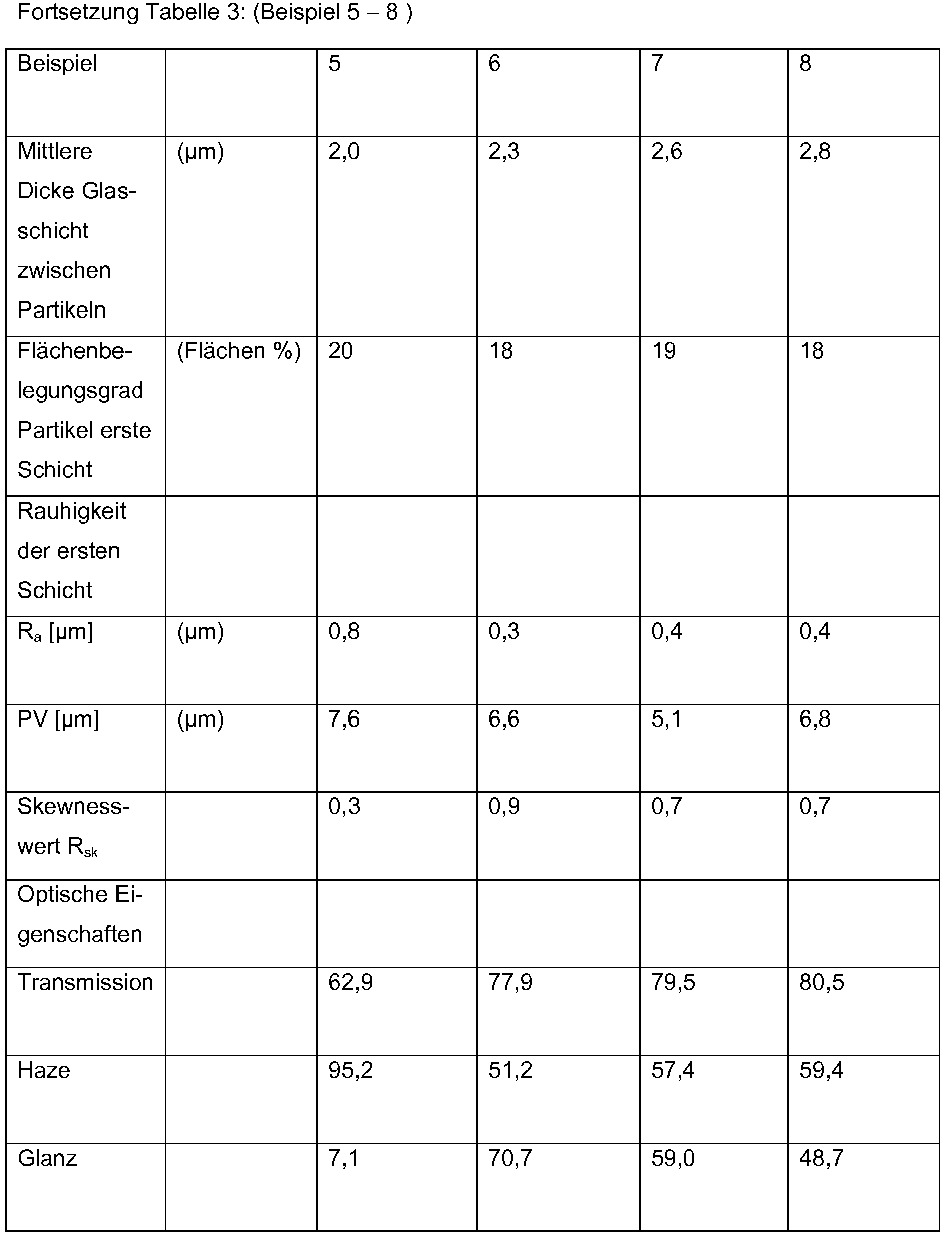

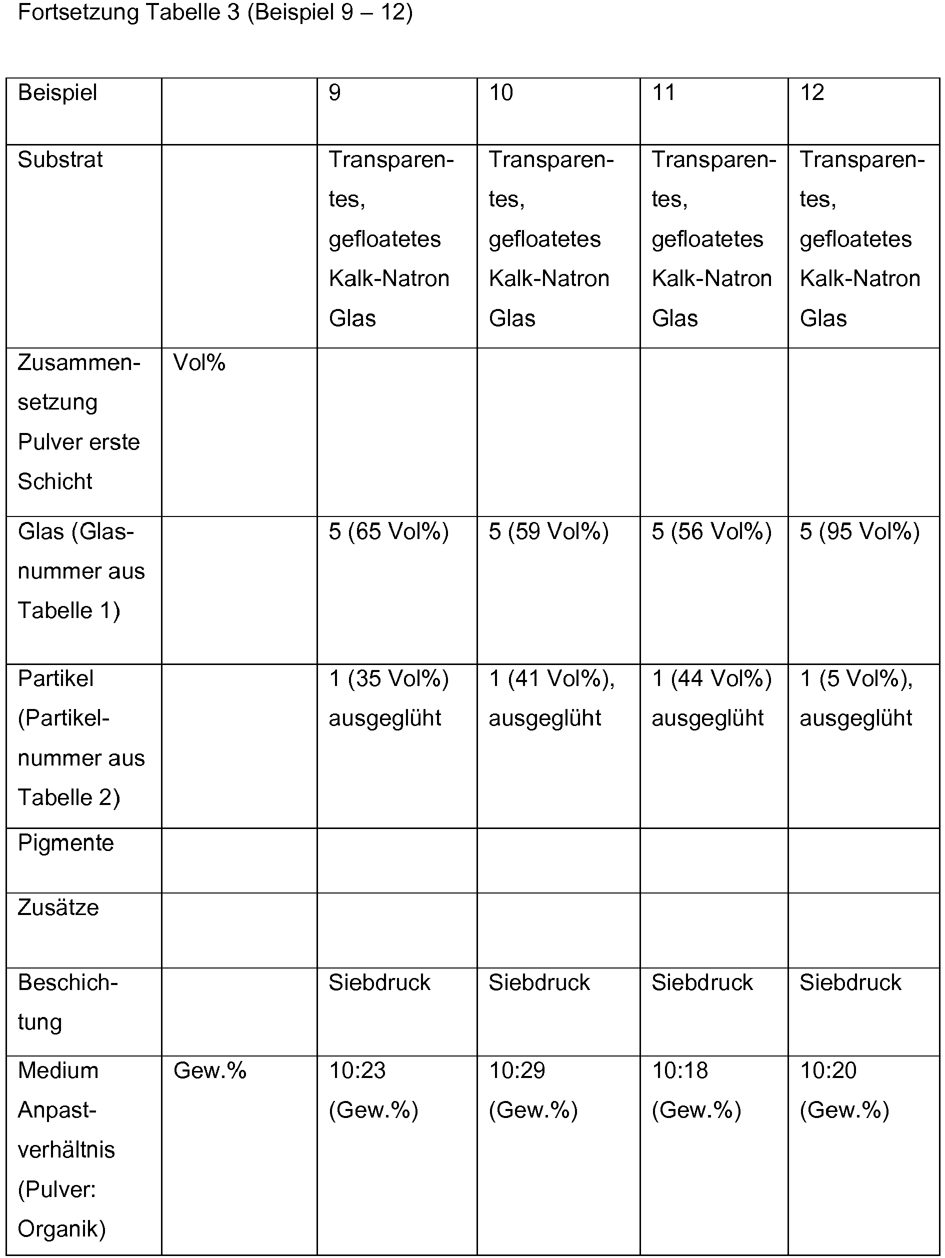

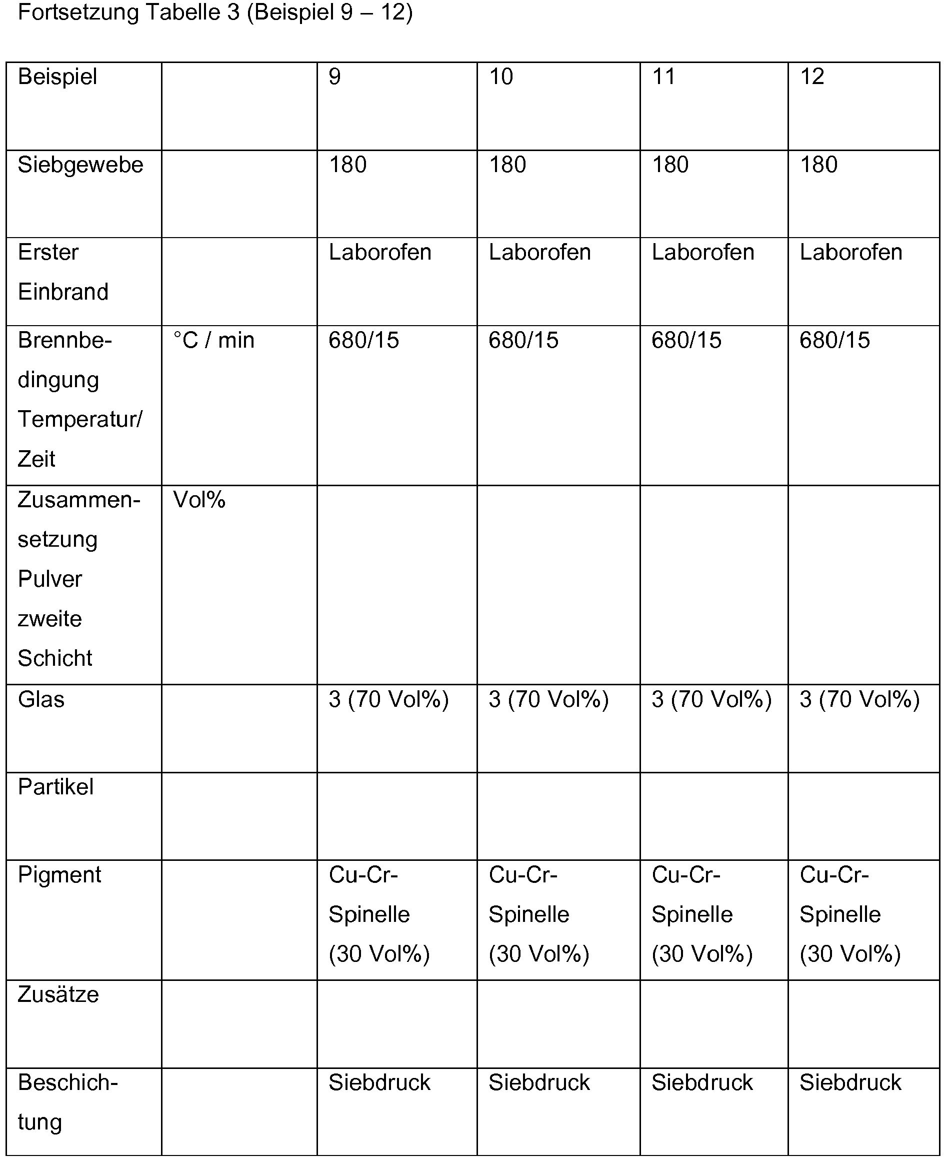

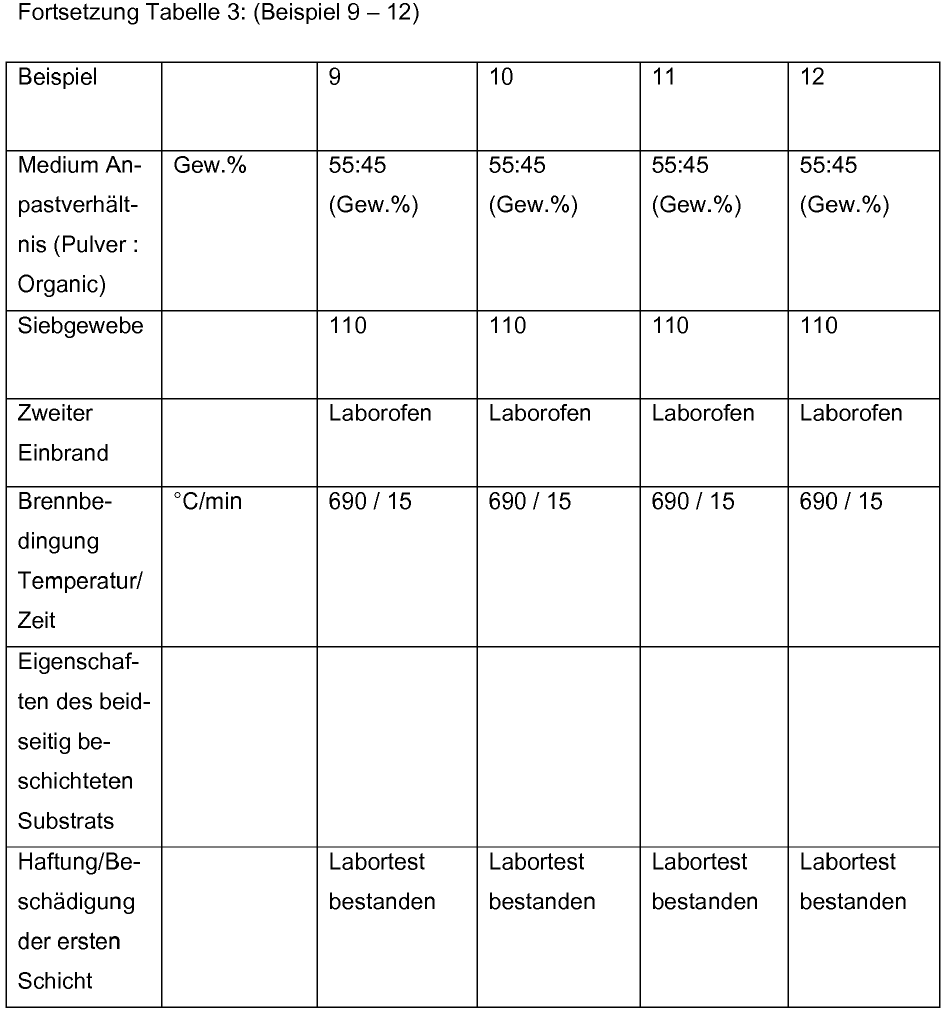

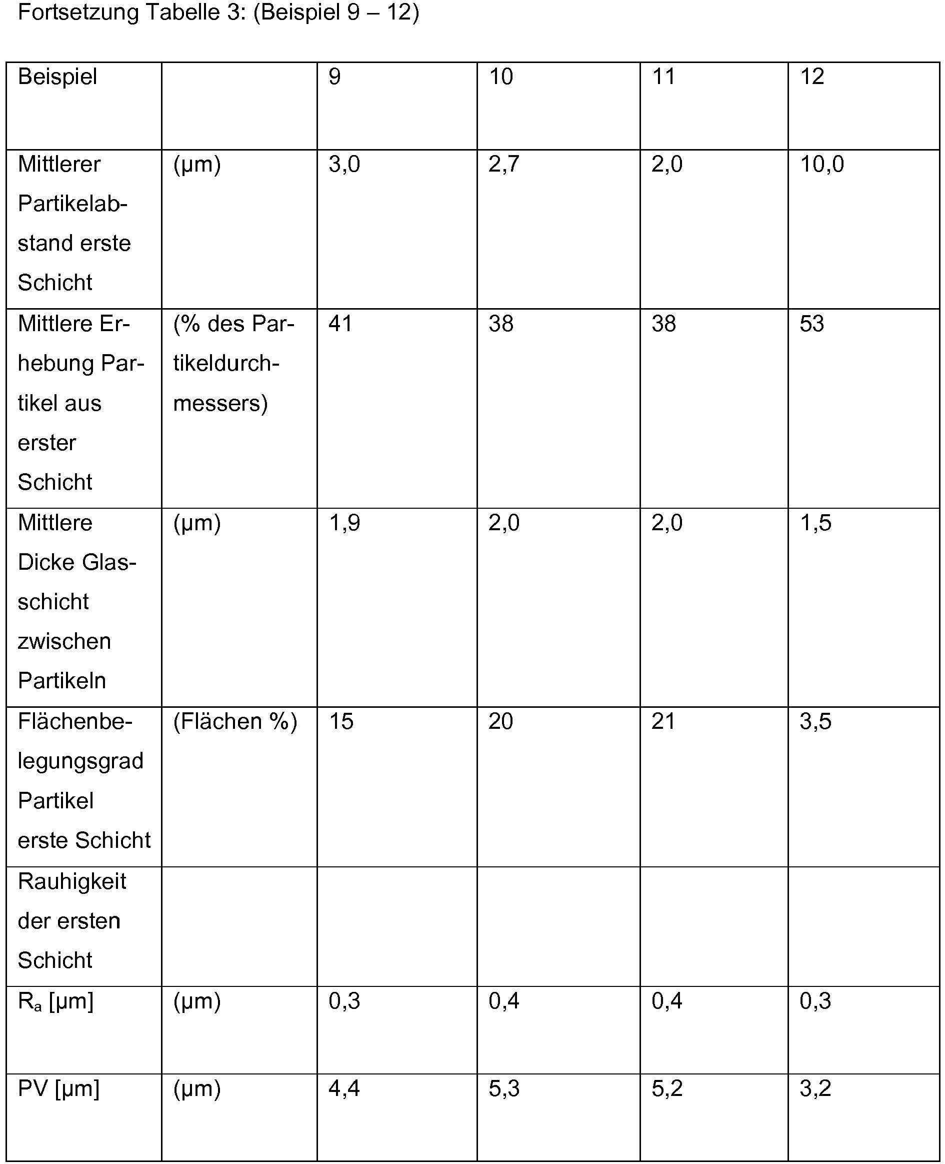

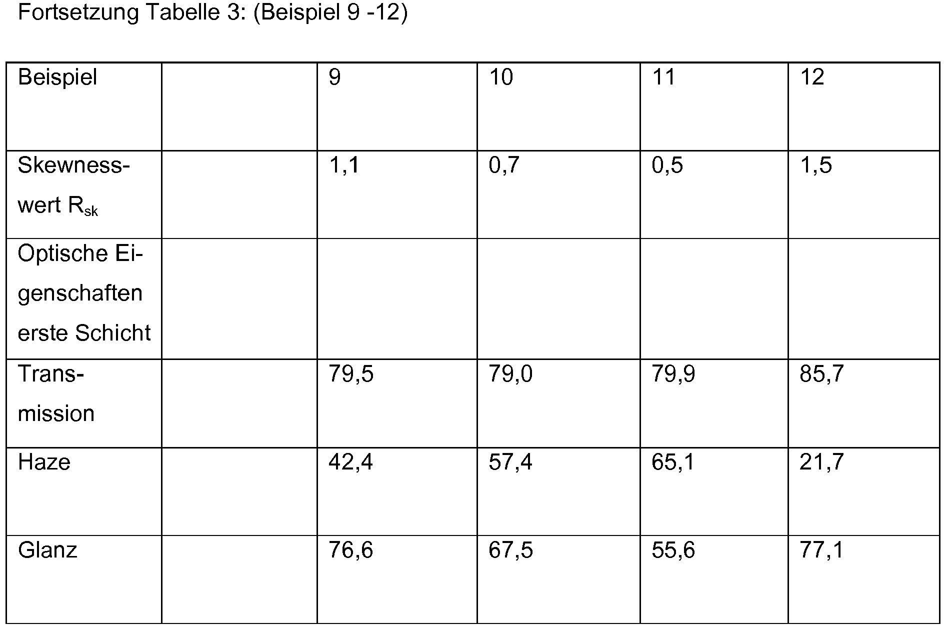

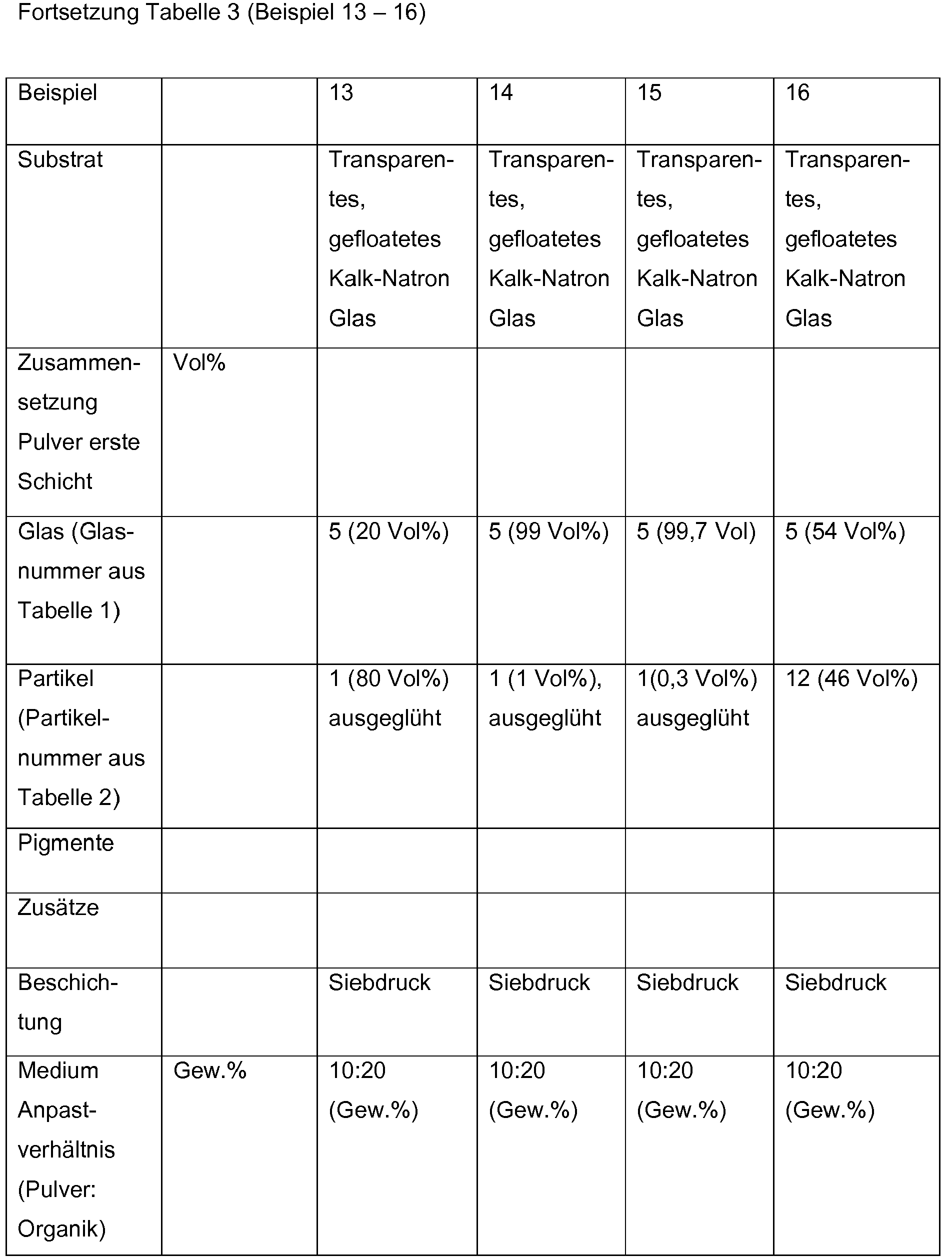

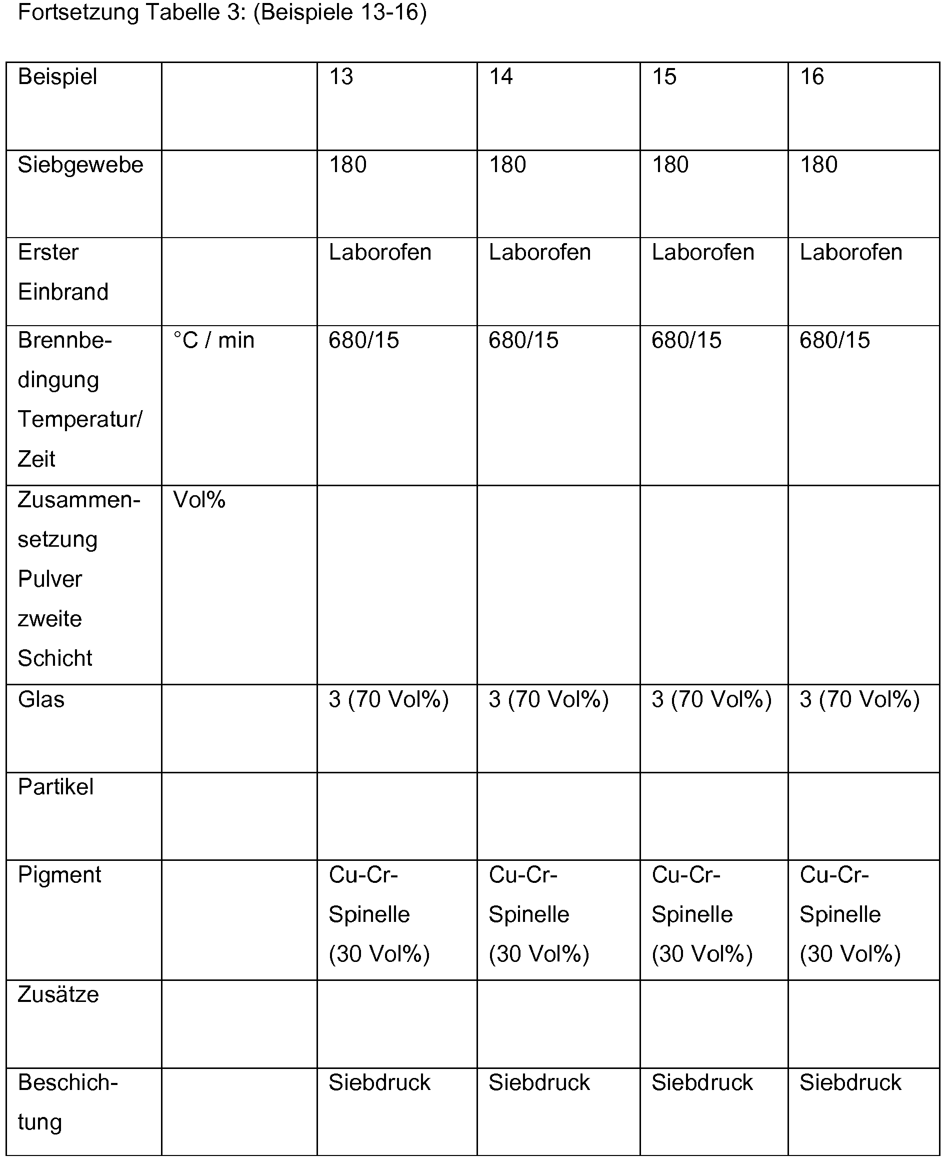

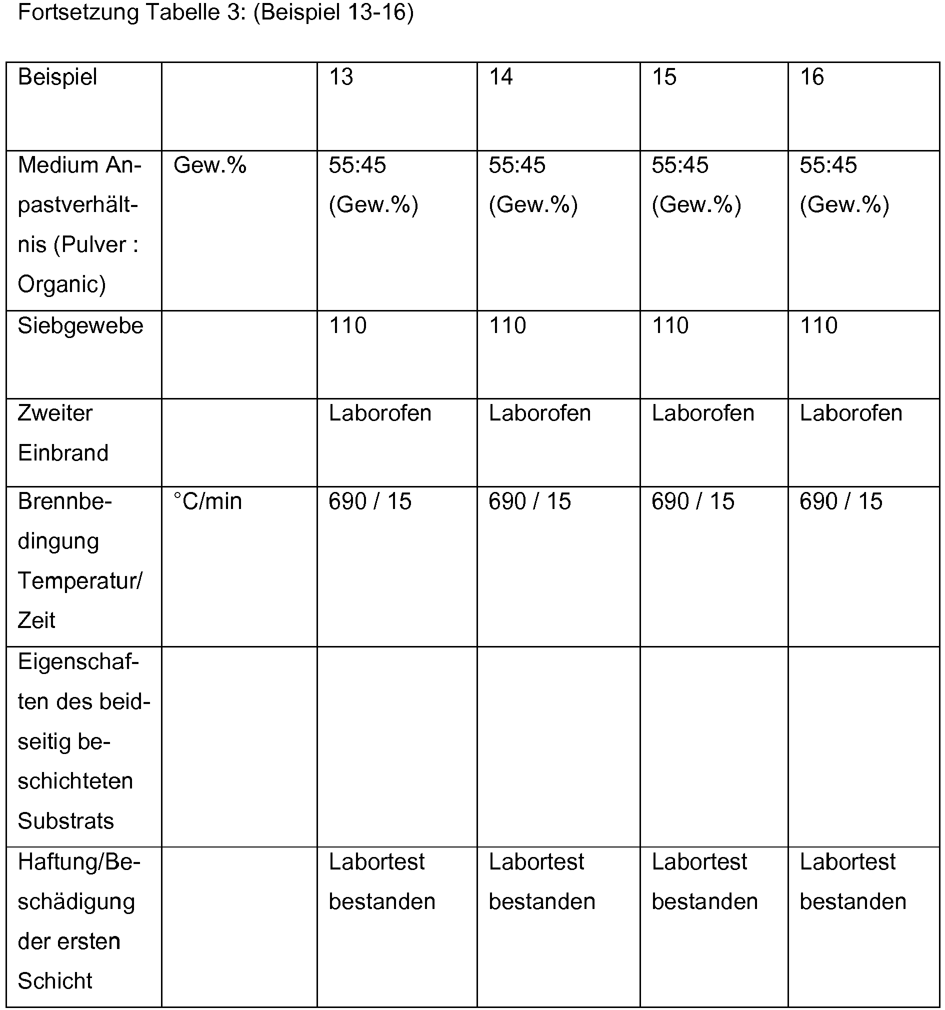

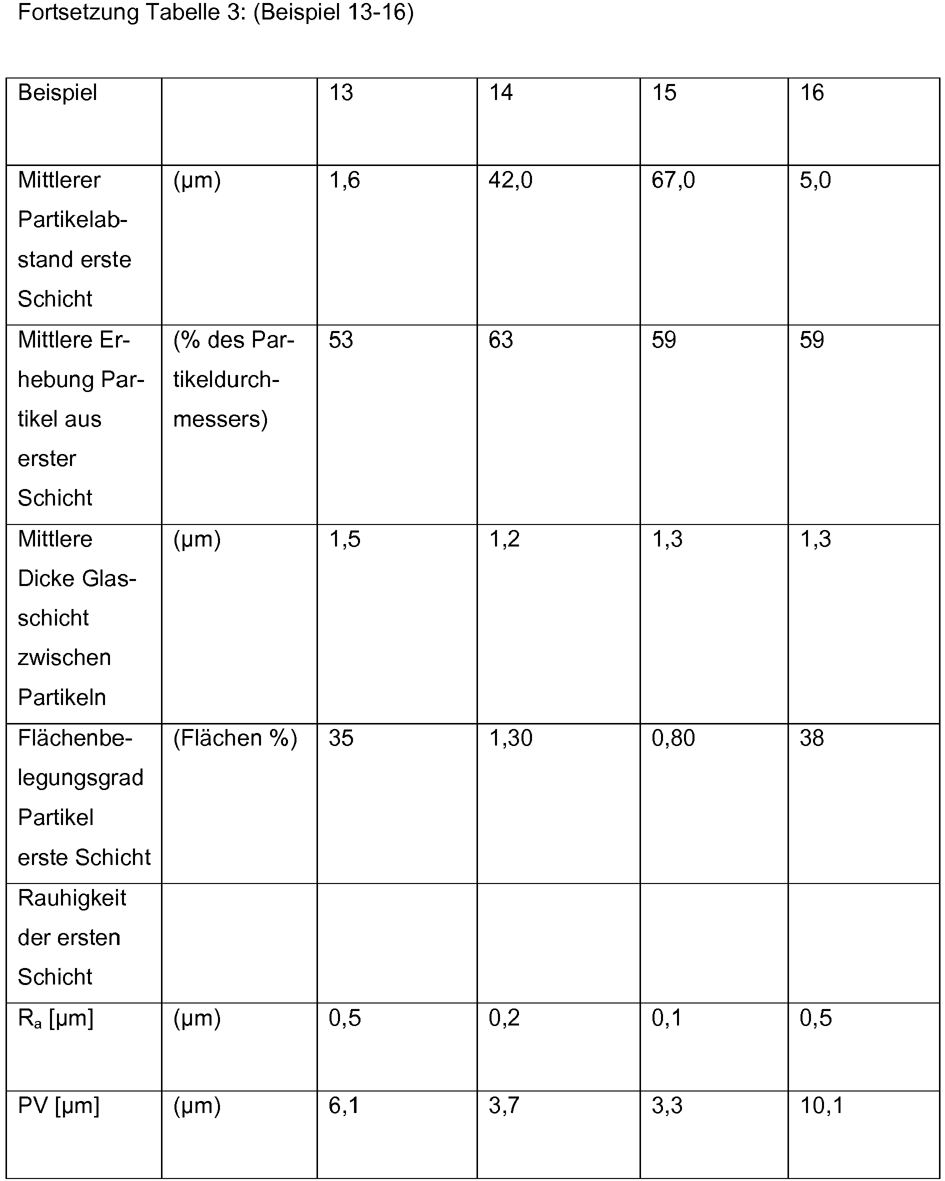

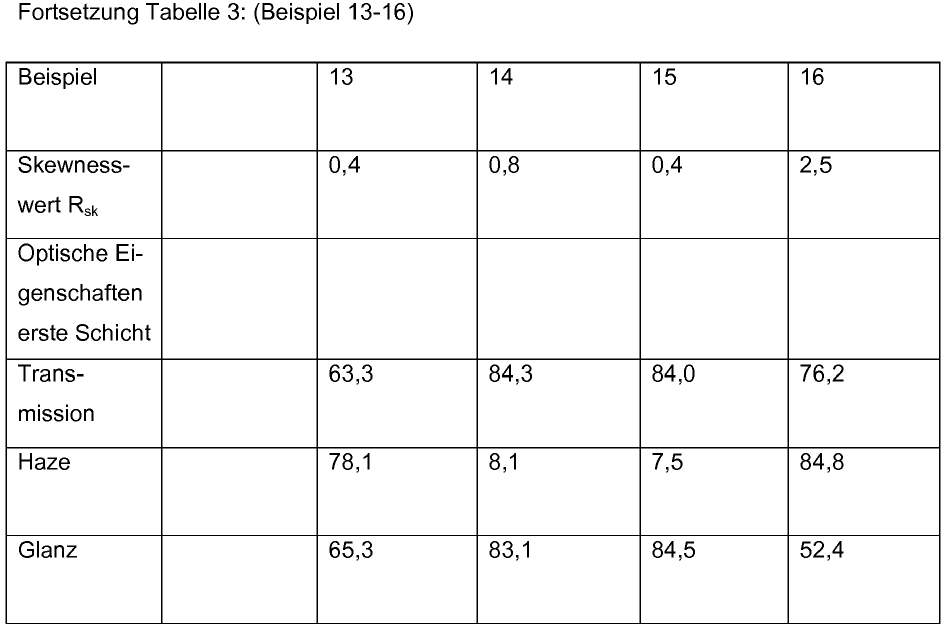

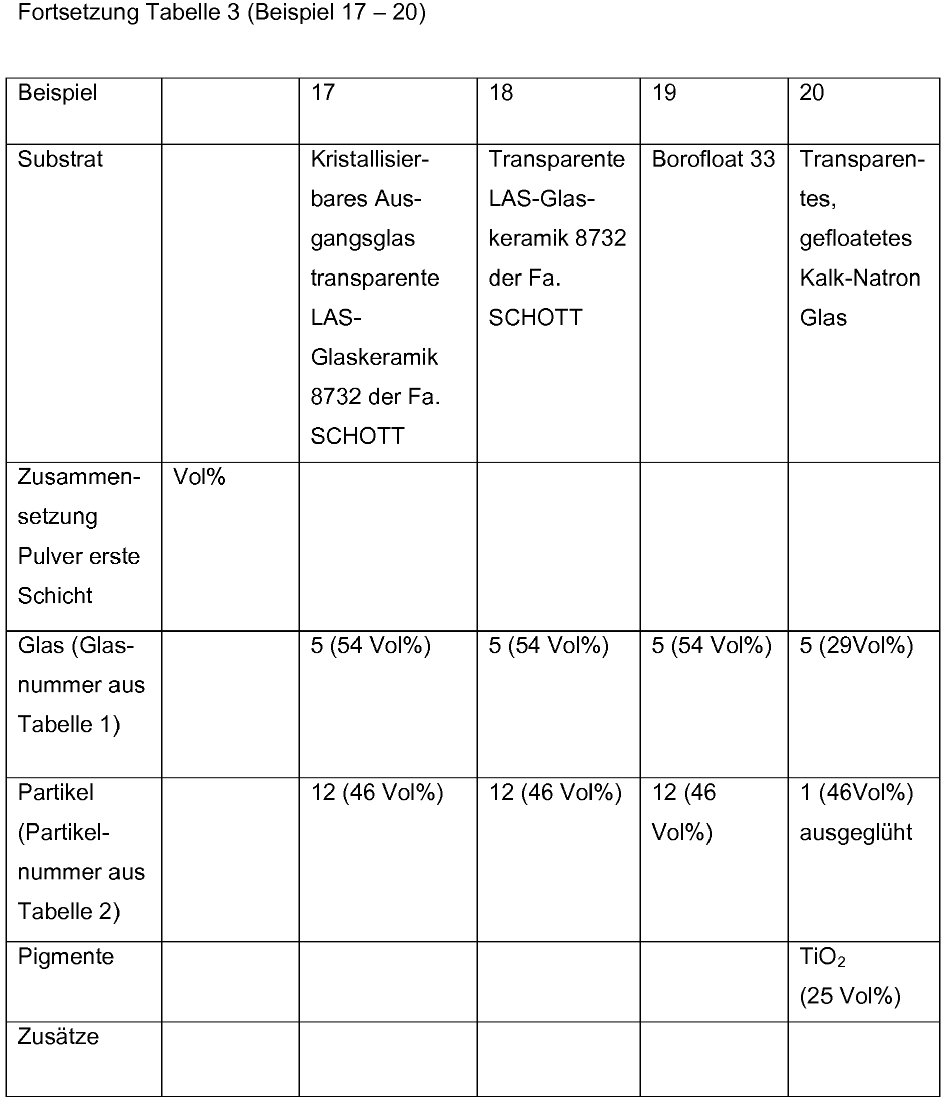

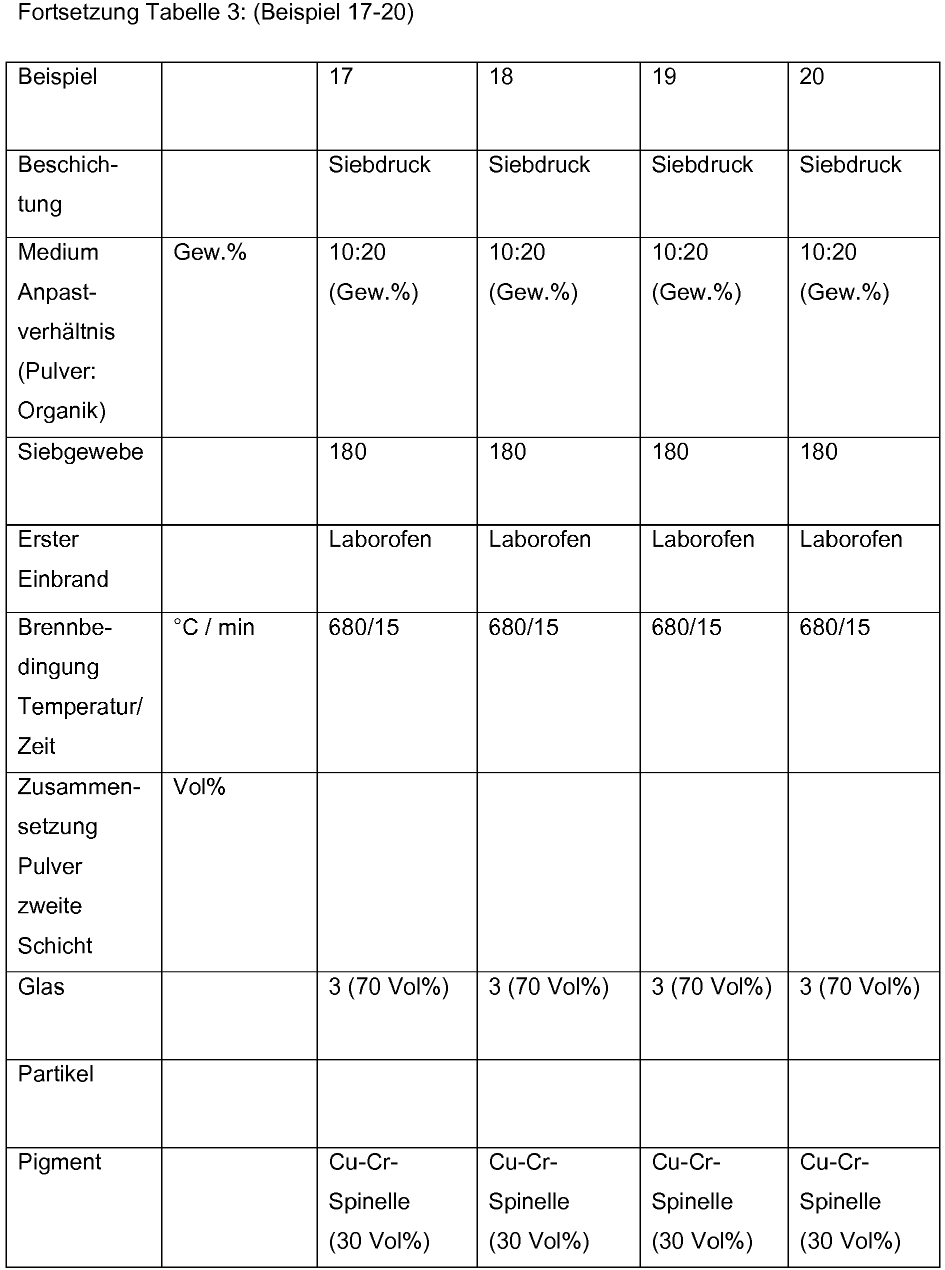

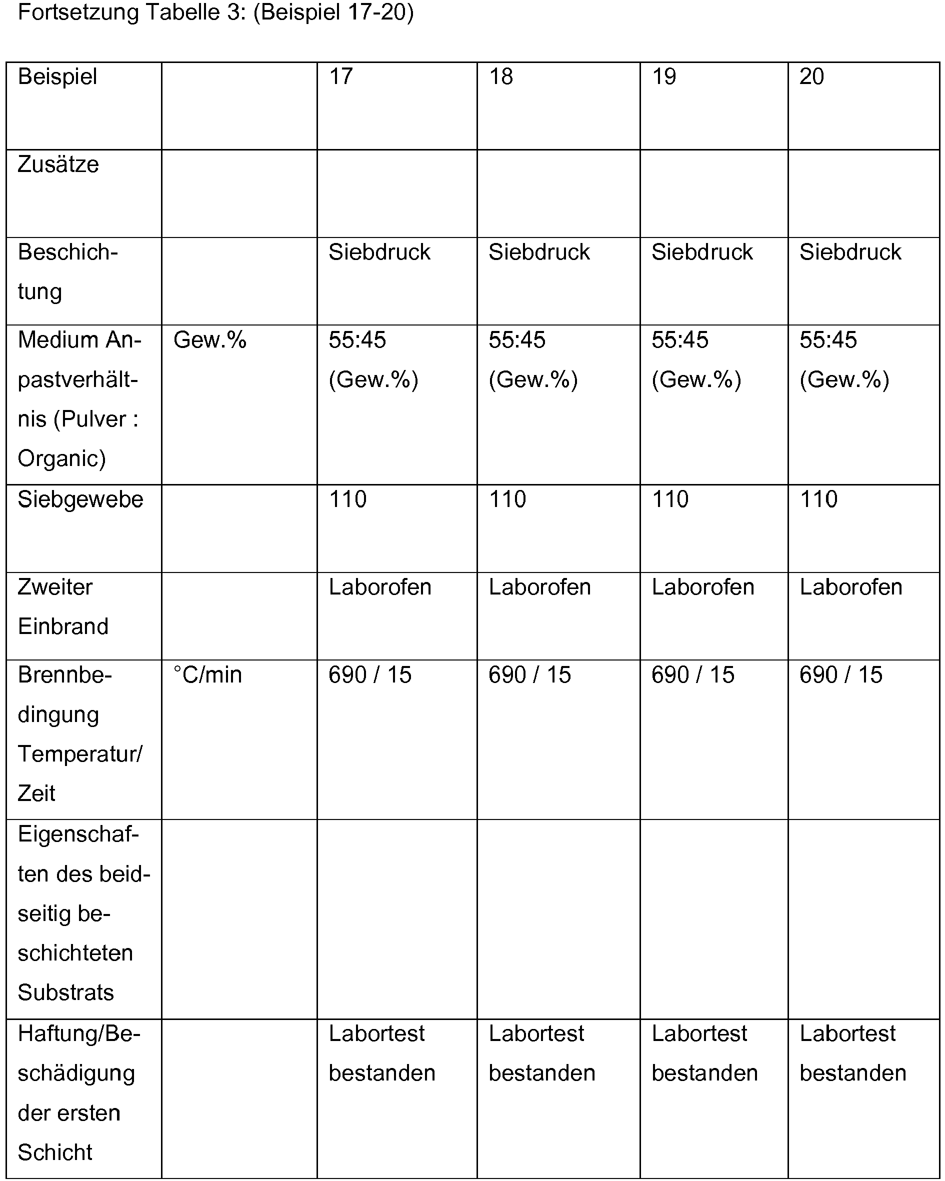

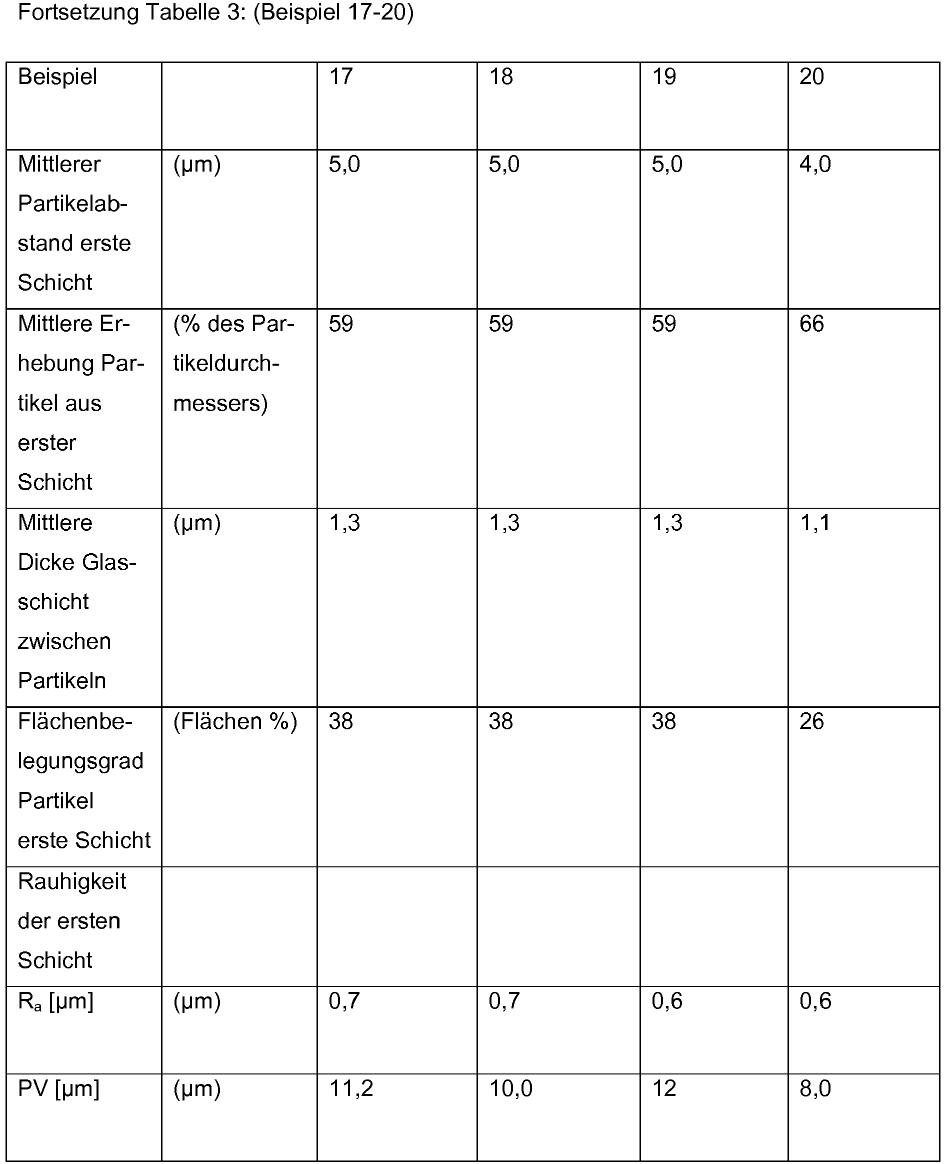

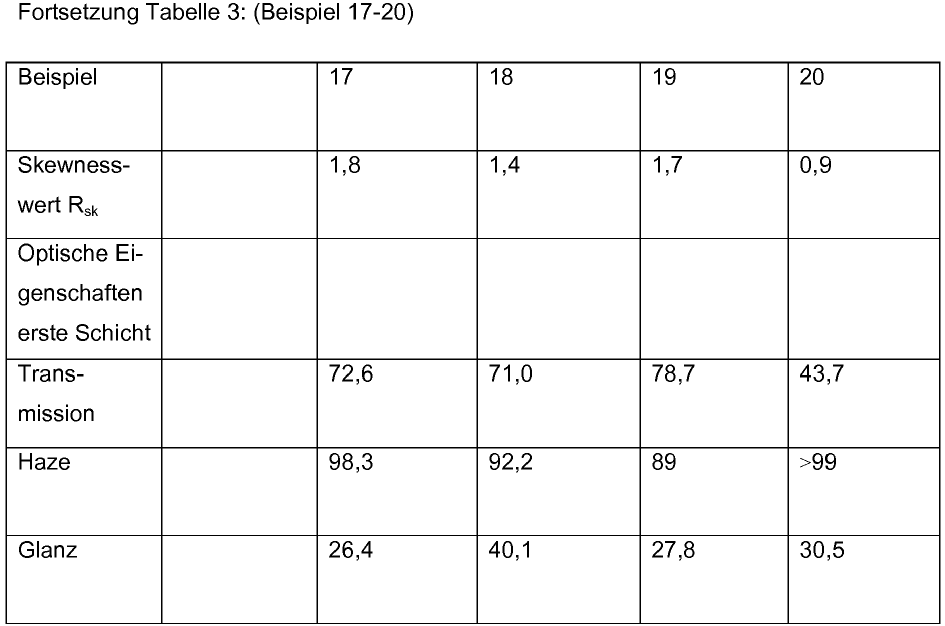

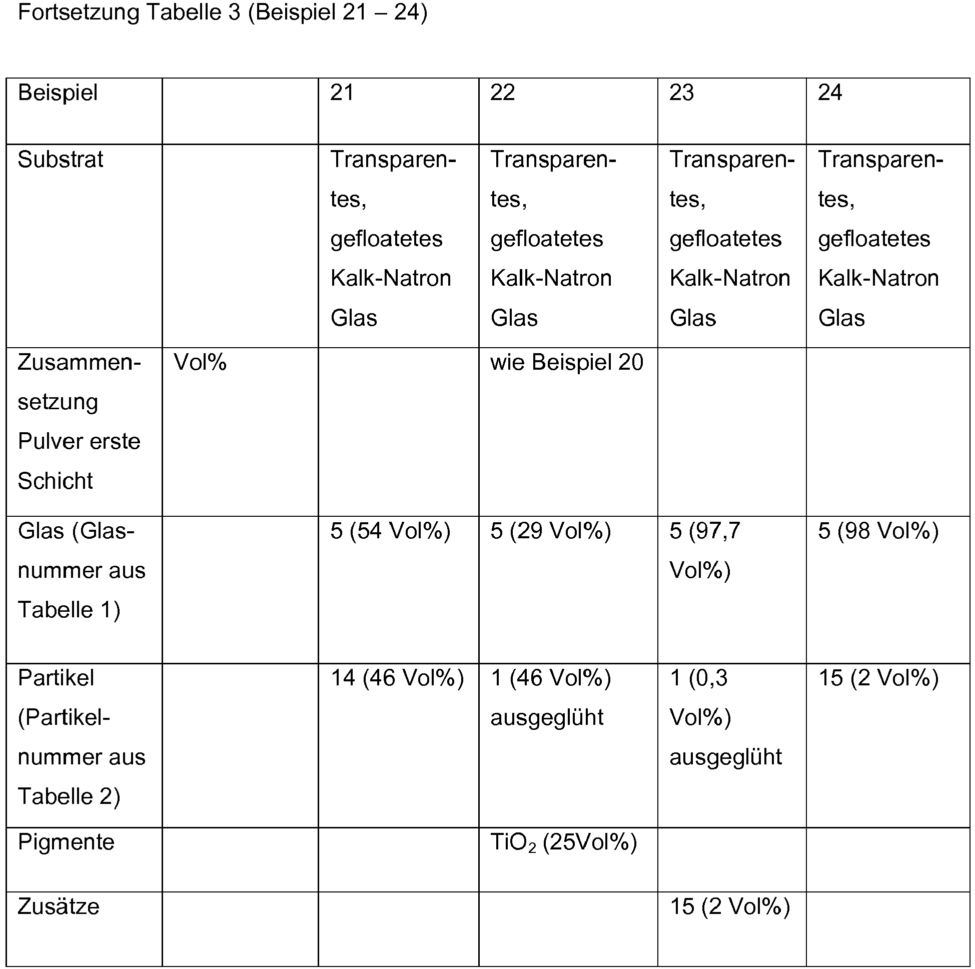

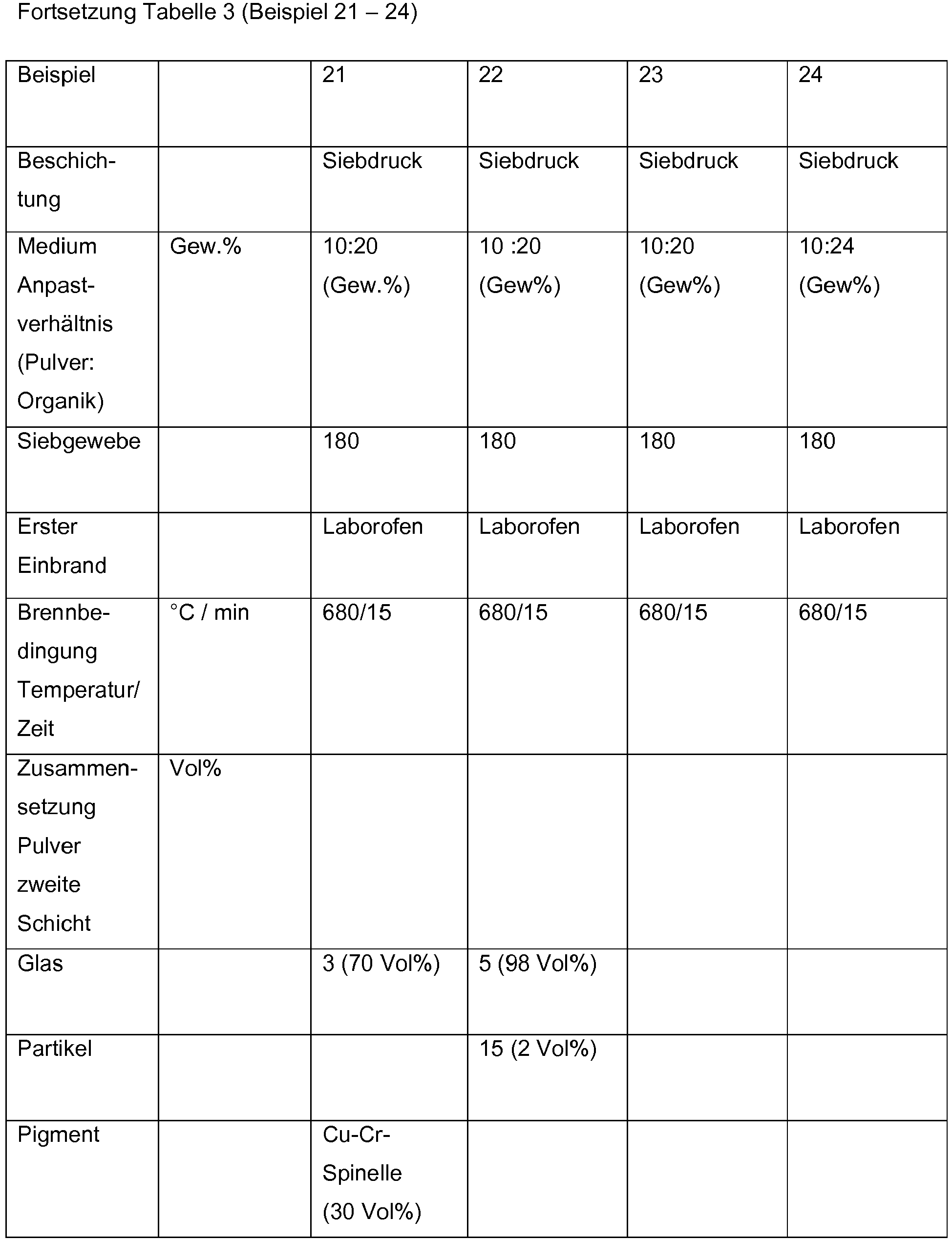

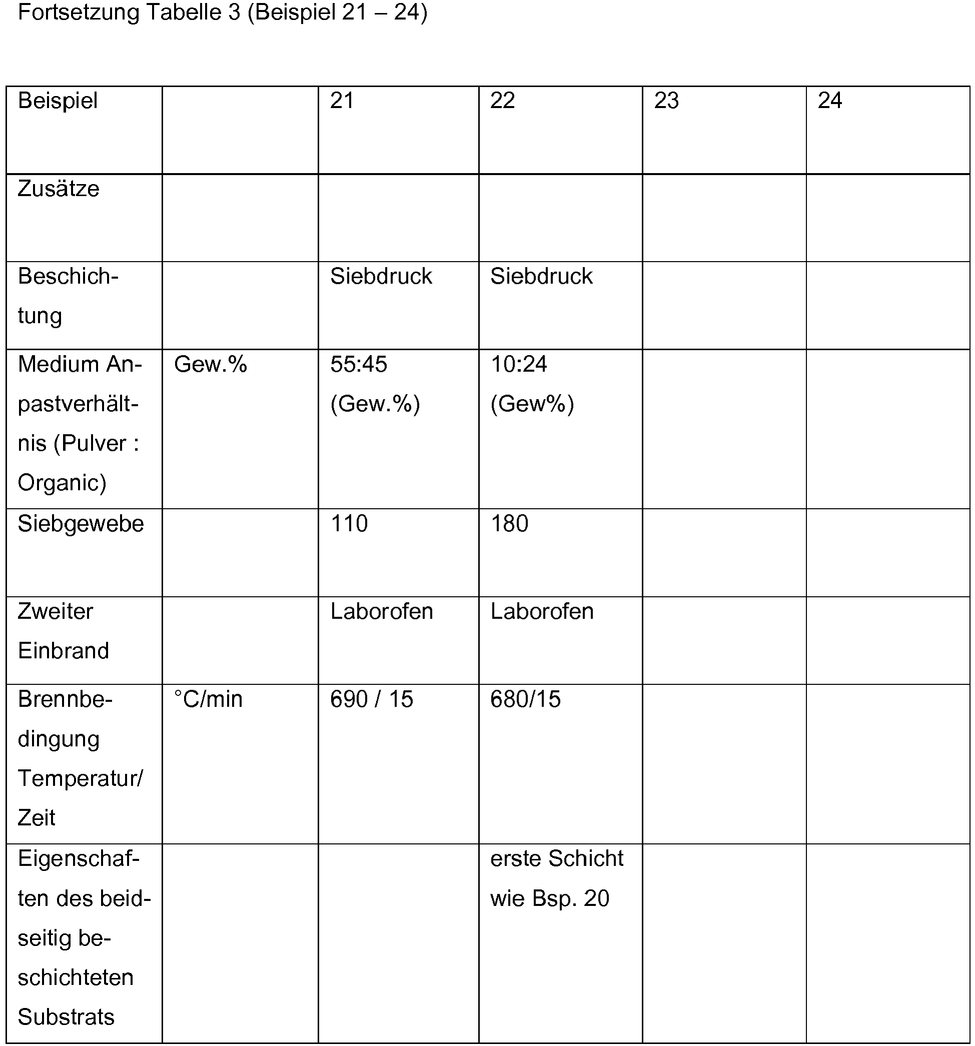

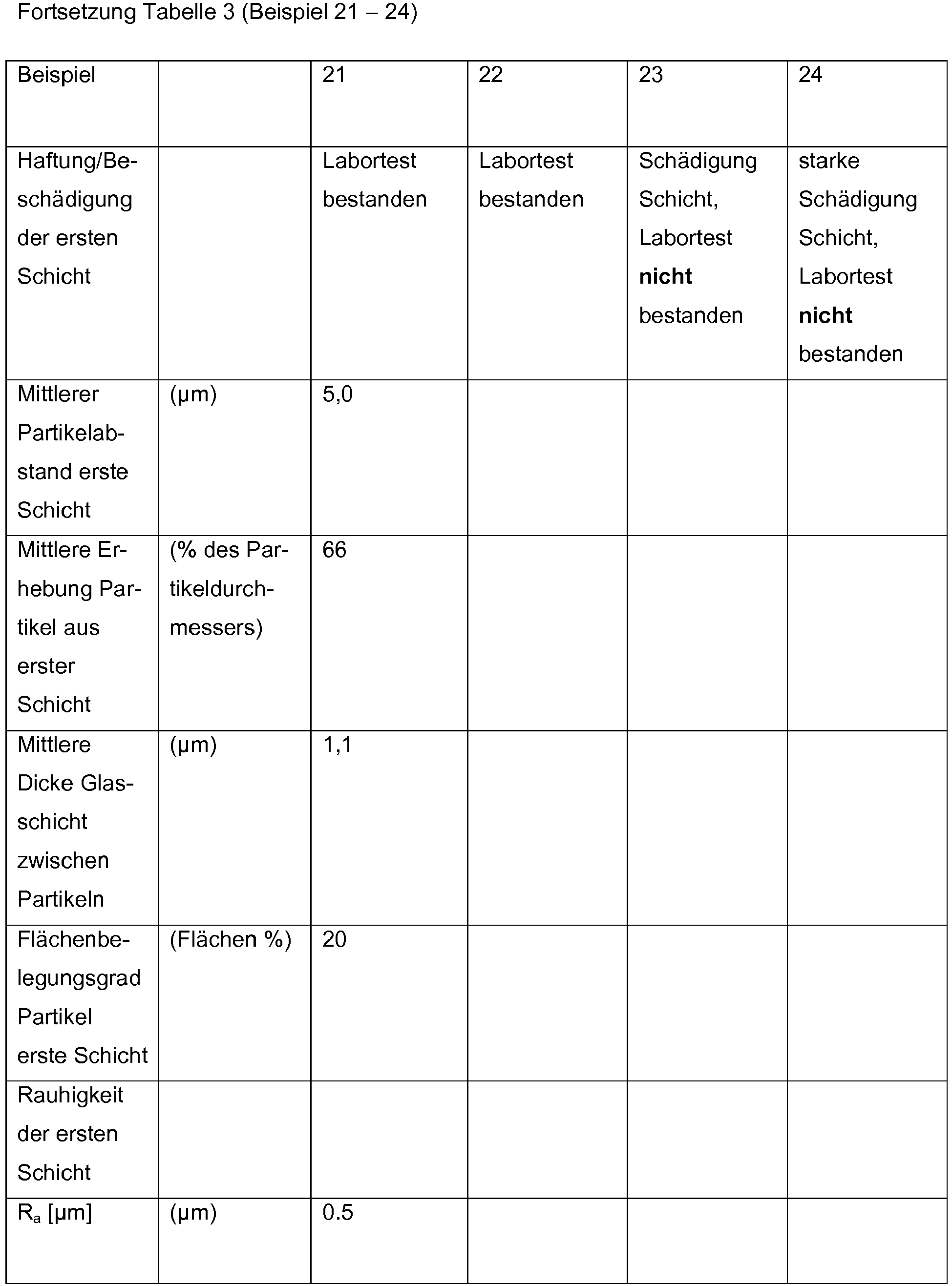

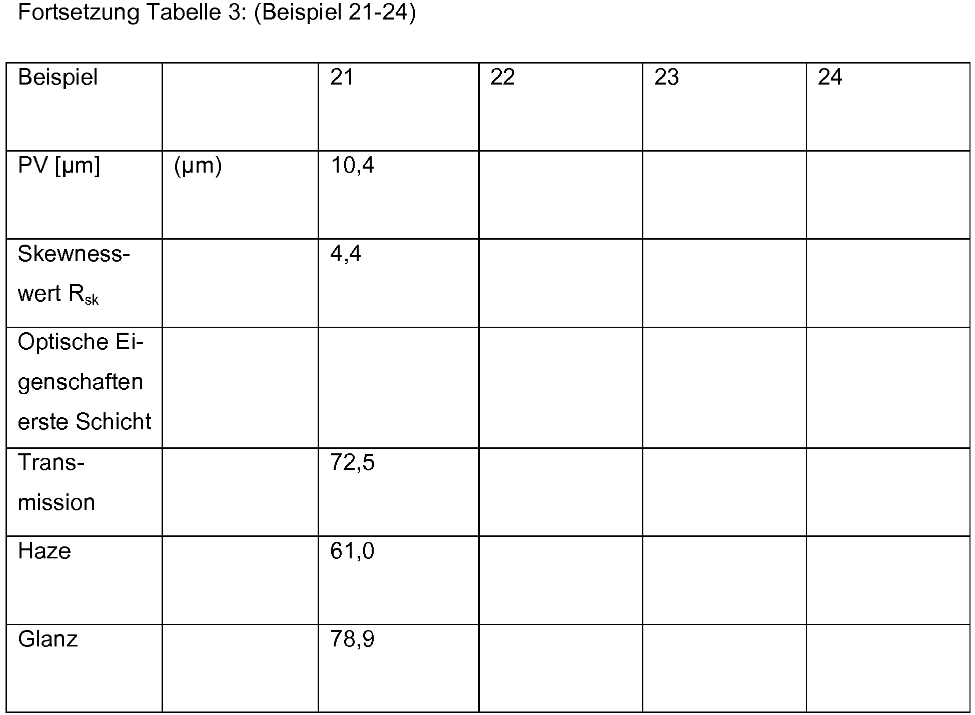

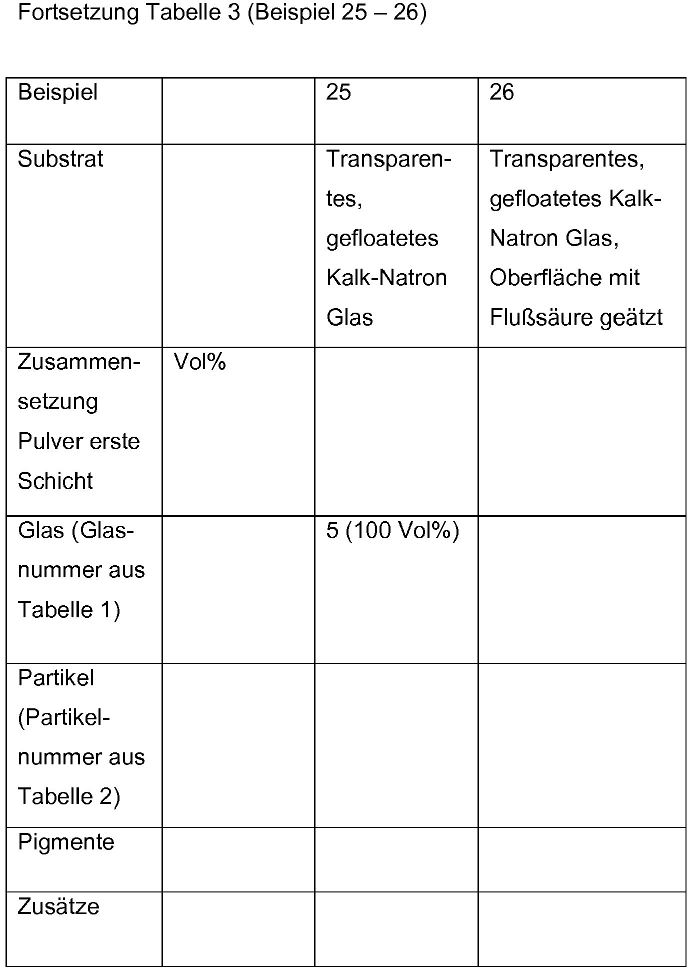

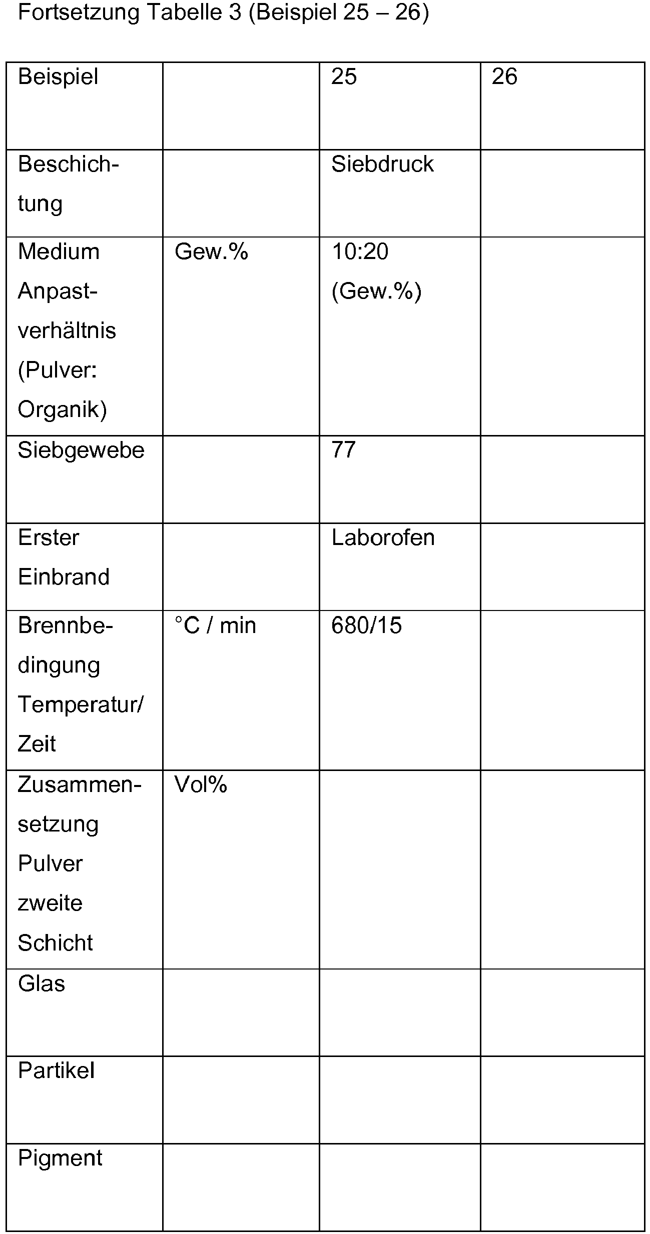

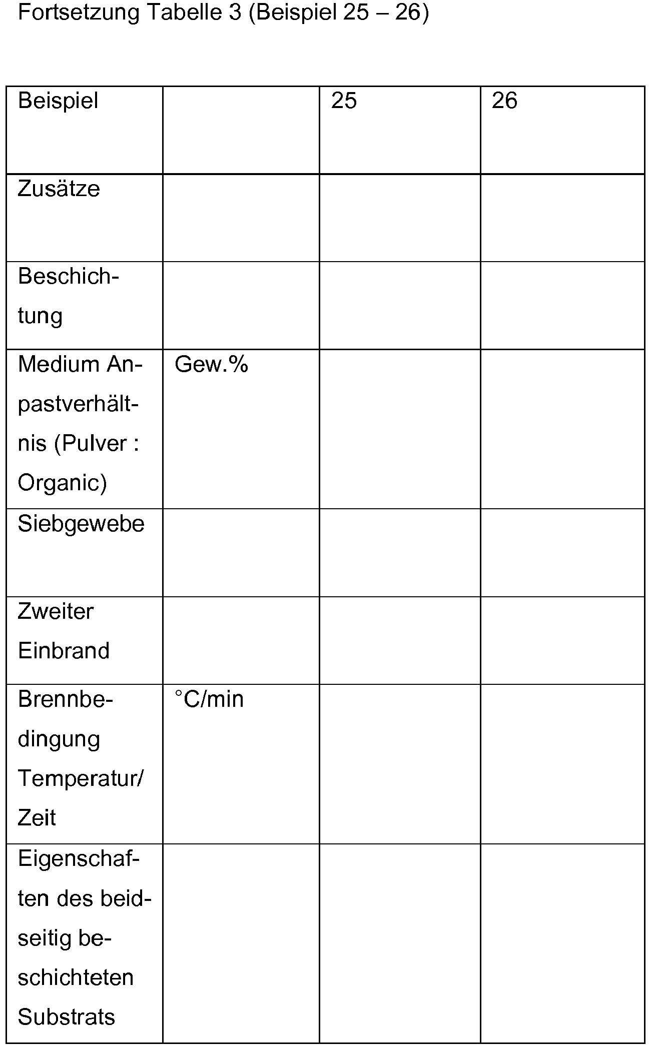

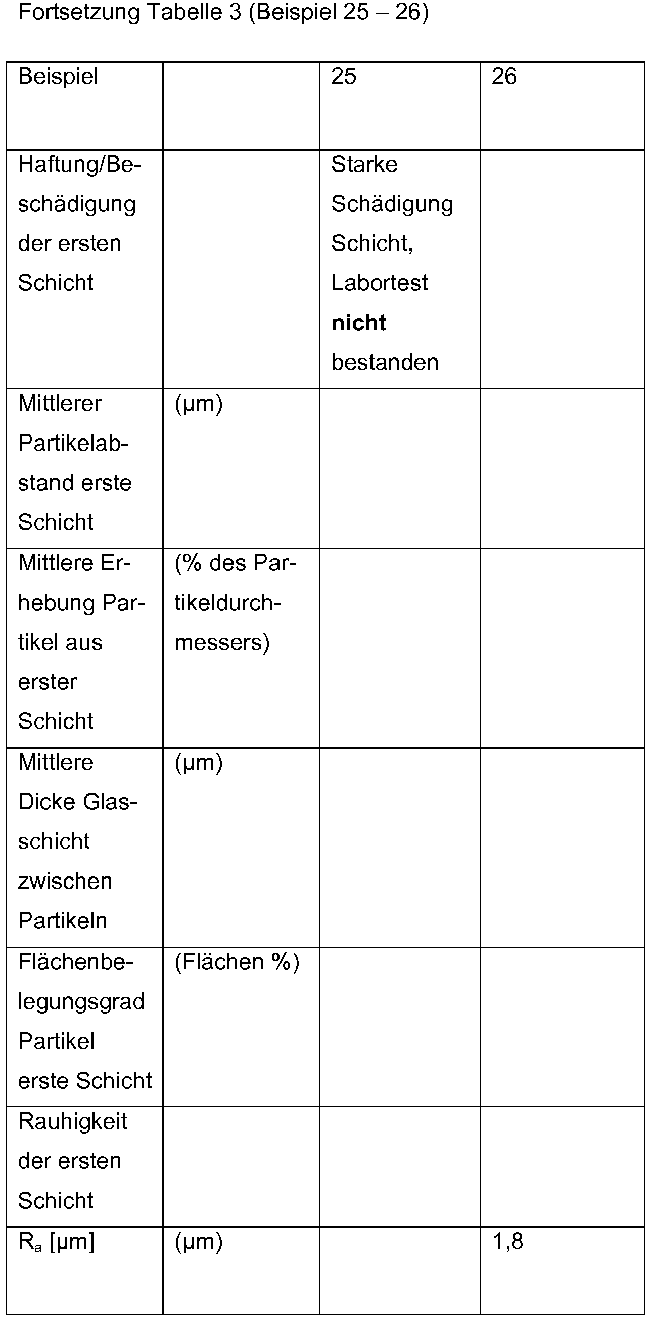

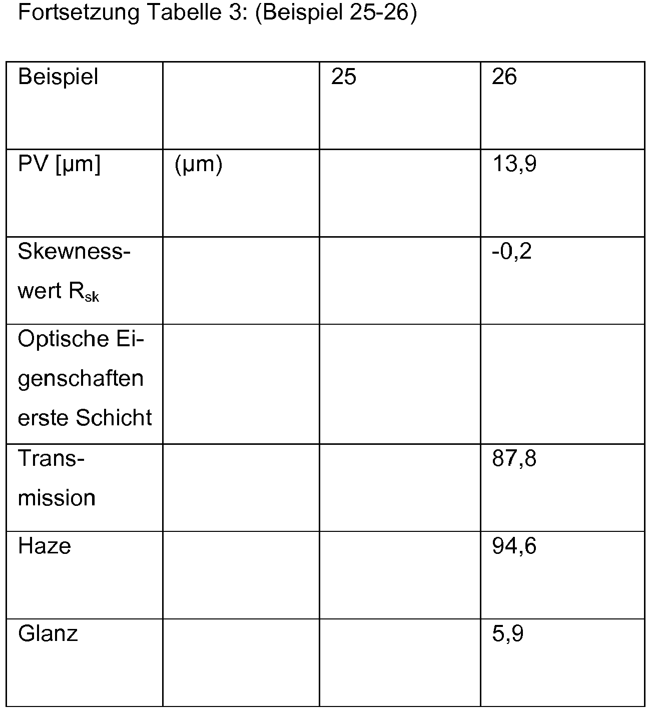

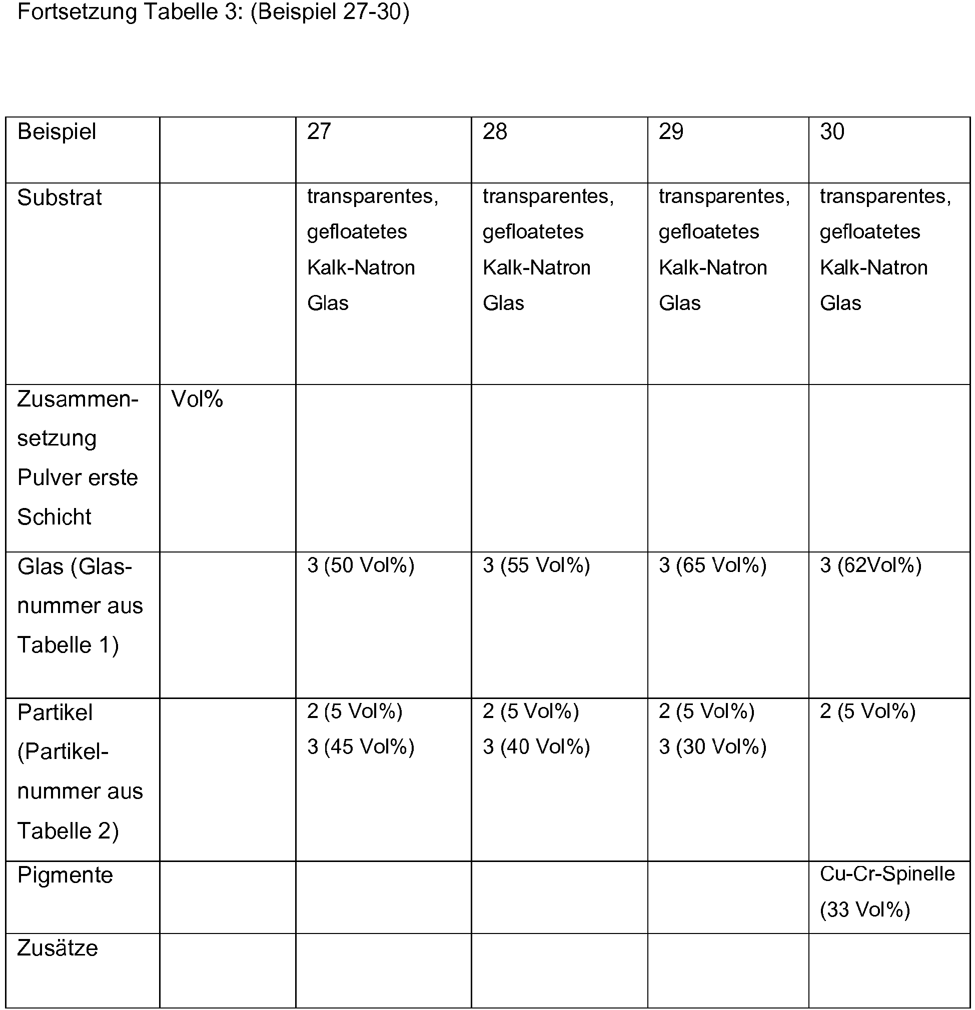

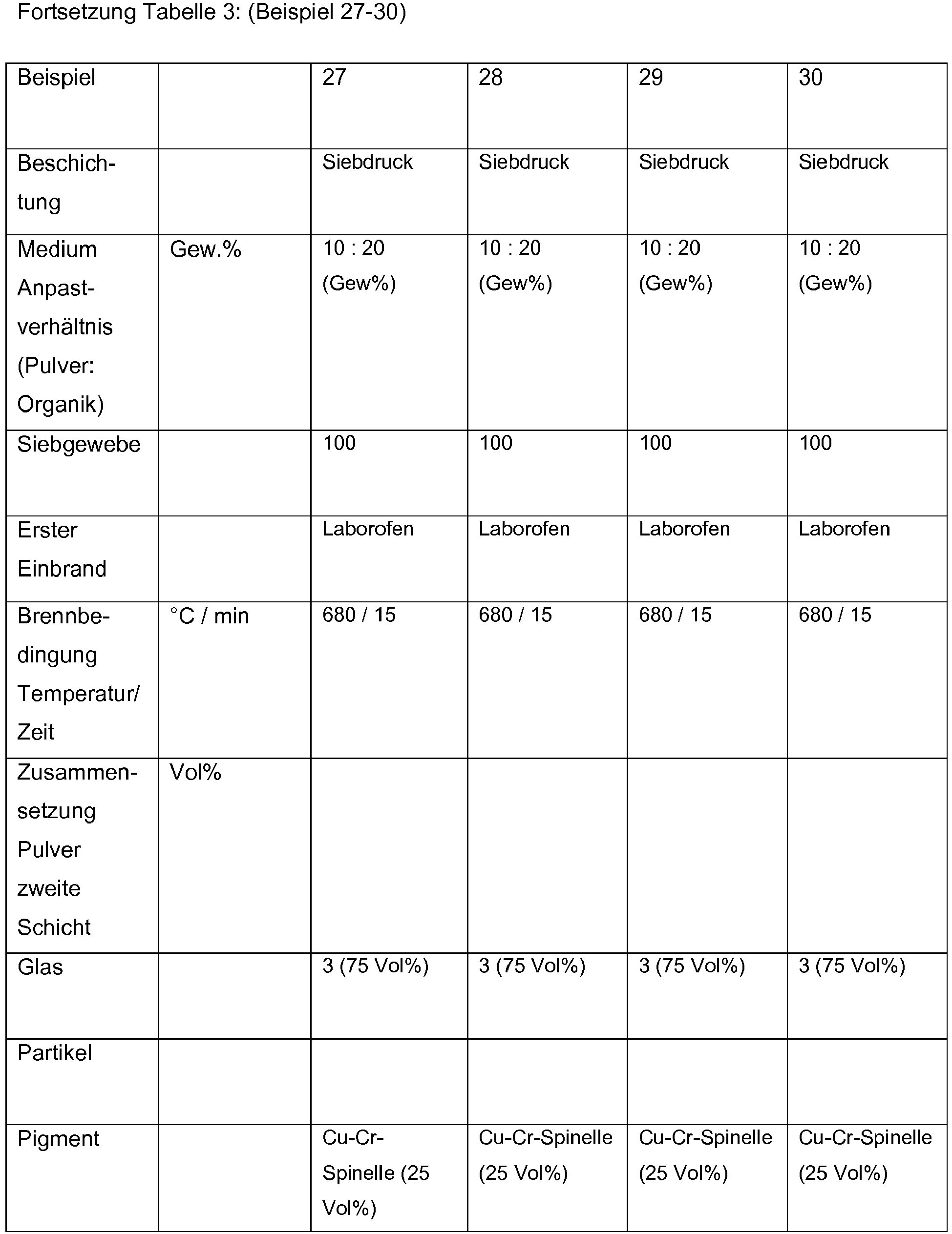

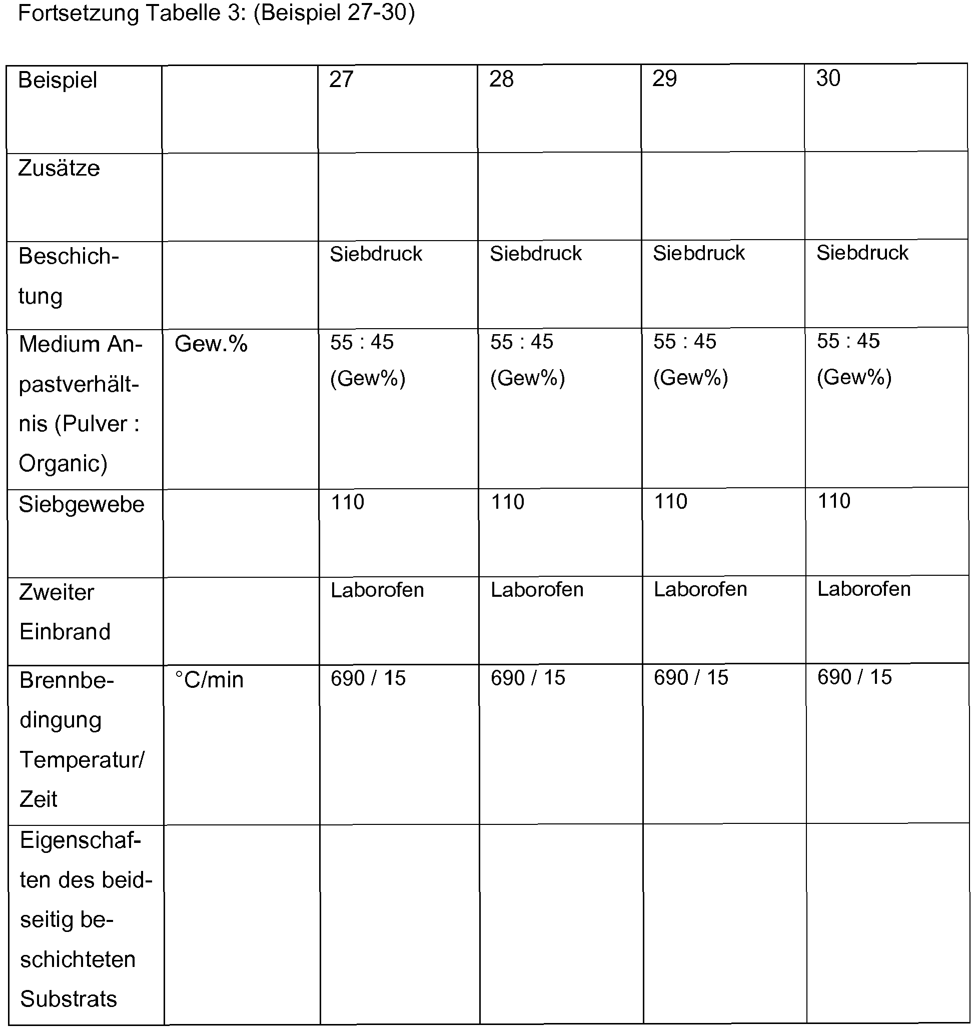

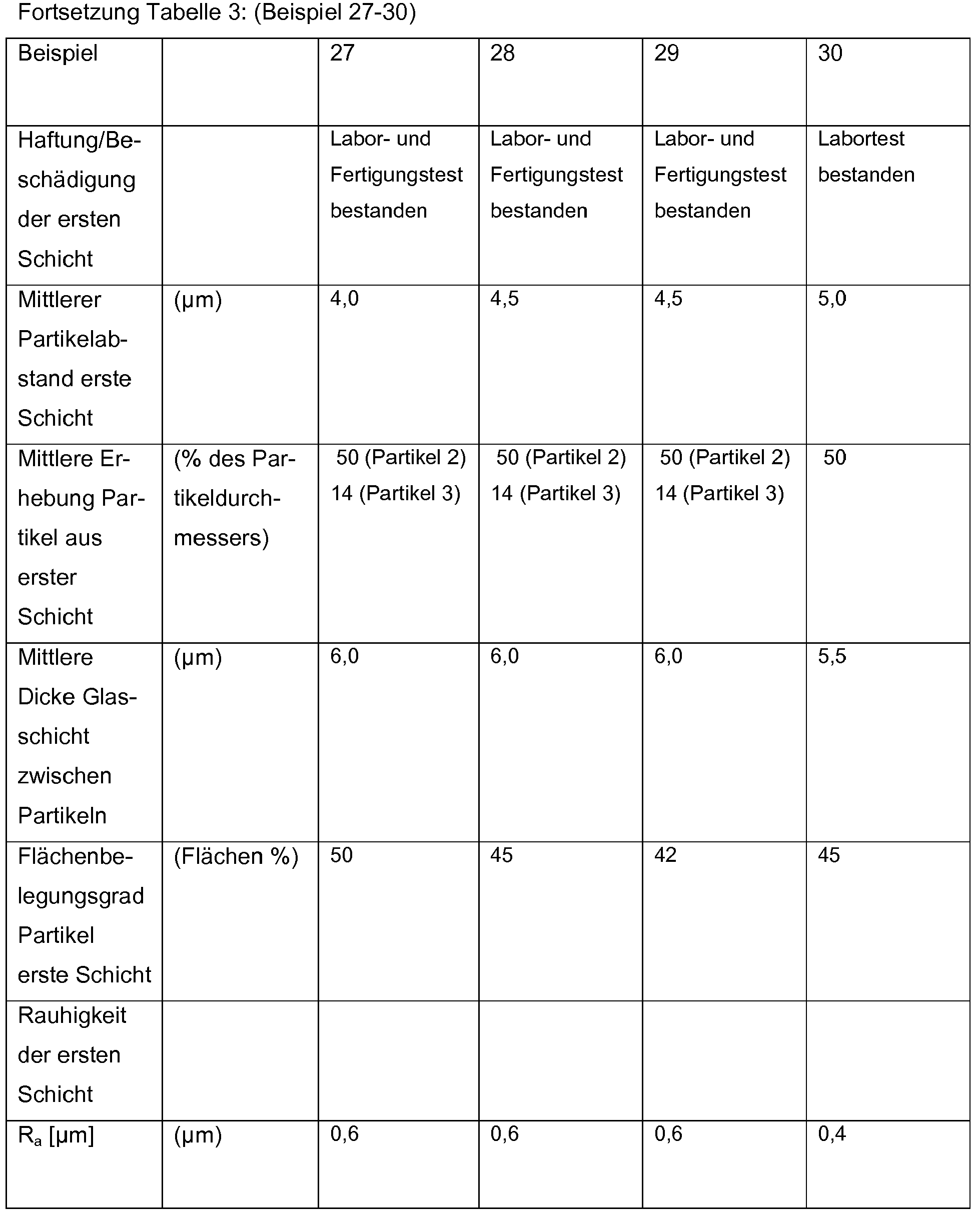

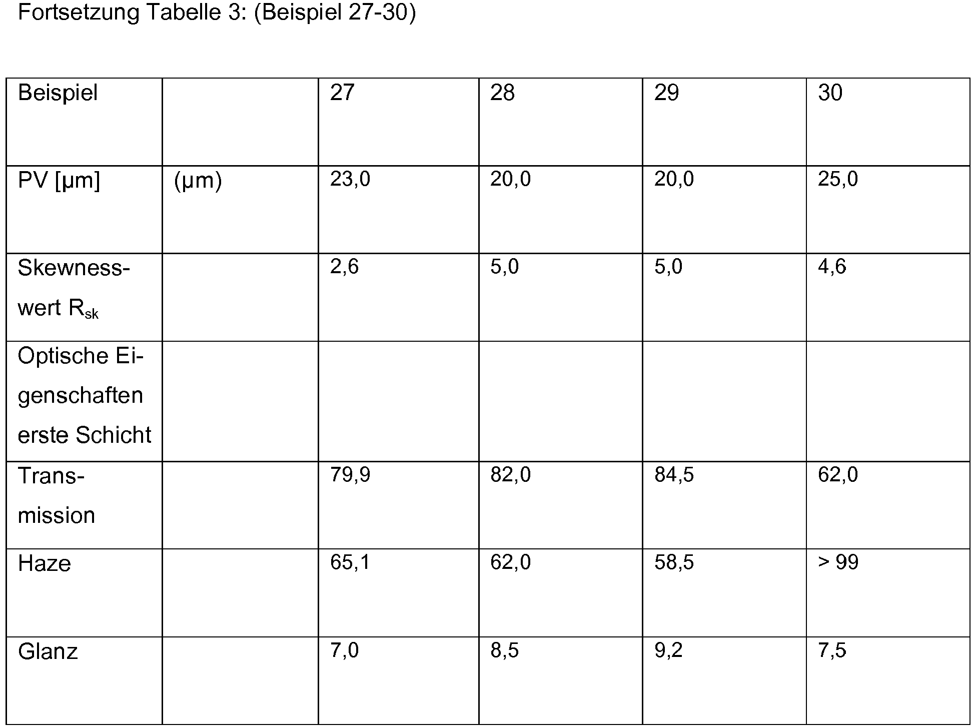

## Patentansprüche

1. Verfahren zur Herstellung eines beschichteten Substrats, wobei das Substrat aus Glas oder Glaskeramik besteht, umfassend die
Schritte:
- Bereitstellen eines scheibenförmigen Substrats;
- Aufbringen eines ersten schichtbildenden Materials auf einer ersten Seite des Substrats, wobei das erste schichtbildende Material wenigstens ein Glaspulver und Partikel umfasst, wobei die Partikel Erhebungen auf der Schicht bewirken, wobei die Erweichungstemperatur oder die Schmelztemperatur der Partikel größer ist als die Erweichungstemperatur des Glaspulvers;
- Erwärmen des beschichteten Substrats unter Erhalt der ersten Schicht mit Erhebungen;
- Aufbringen eines zweiten schichtbildenden Materials auf einer zweiten Seite des Substrats, wobei die zweite Seite gegenüber der ersten Seite liegt;
- Erwärmen des beschichteten Substrats unter Erhalt der zweiten Schicht, wobei das Substrat während des Erwärmens ganz oder teilweise auf den Erhebungen der ersten Schicht aufliegt, wobei
- die zweite Schicht ebenfalls eine Glaskomponente umfasst und die Schichtmaterialien auf beiden Seiten des Substrats bevorzugt aus anorganischem glasbasiertem Emaille bestehen, und wobei
- sich die Erweichungstemperaturen der Glaskomponenten auf beiden Seiten des Substrats um weniger als 200 K unterscheiden.

2. Verfahren nach Anspruch 1,
**dadurch gekennzeichnet,**
**dass** die Temperatur beim Erwärmen auf oder über der Erweichungstemperatur des Glaspulvers und unterhalb der Schmelztemperatur
oder der Erweichungstemperatur der Partikel liegt.

3. Verfahren nach einem der vorhergehenden Ansprüche,
**gekennzeichnet durch** wenigstens eines der folgenden Merkmale:
- Das Glaspulver fließt unterhalb der Verformungstemperatur des Substratmaterials glatt und/oder
- Das erste schichtbildende Material enthält wenigstens 5 bis 99,7 Vol-% Glaspulver und/oder der mittlere Durchmesser der Partikel liegt im bereich von 0,5 bis 40 µm und/oder
- Das zweite schichtbildende Material umfasst ebenfalls mindestens ein Glaspulver.

4. Scheibenförmiges Substrat, wobei das Substratmaterial aus Glas oder Glaskeramik besteht, umfassend wenigstens zwei mittels Erwärmen
aufgebrachte Schichten,
**dadurch gekennzeichnet,**
**dass** die erste Schicht auf einer ersten Seite des Substrats aufgebracht ist und wenigstens eine Glaskomponente und Partikel umfasst, dass die Partikel Erhebungen auf der ersten Schicht bewirken, dass die Erweichungstemperatur oder die Schmelztemperatur der Partikel größer ist als
die Erweichungstemperatur der Glaskomponente, und dass die zweite Schicht
auf einer zweiten Seite des Substrats aufgebracht ist, wobei die zweite Seite gegenüber der ersten Seite liegt, wobei die zweite Schicht ebenfalls eine Glaskomponente umfasst und die Schichtmaterialien auf beiden Seiten des Substrats bevorzugt aus anorganischem glasbasiertem Emaille bestehen, und wobei sich die Erweichungstemperaturen der Glaskomponenten auf beiden Seiten des Substrats um weniger als 200 K unterscheiden.

5. Scheibenförmiges Substrat nach Anspruch 4,
**dadurch gekennzeichnet, dass** sich die Erweichungstemperaturen der Glaskomponenten auf beiden Seiten des Substrats um weniger als 100K unterscheiden

6. Scheibenförmiges Substrat nach einem der Ansprüche 4 oder 5,
**gekennzeichnet durch** wenigstens eine der folgenden Merkmale:,
- Die mittleren Abstände der Partikel betragen weniger als das zwanzigfache des mittleren Partikeldurchmesser und/oder die Partikel ragen mit 10 bis 70% ihres mittleren Durchmesser aus der durch die Glaskomponenten gebildeten Schicht heraus.

7. Scheibenförmiges Substrat nach einem der Ansprüche 4 bis 6,
**dadurch gekennzeichnet,**
**dass** die Partikel eine abgerundete Außenkontur bevorzugt in Kugelform besitzen.

8. Scheibenförmiges Substrat nach einem der Ansprüche 4 bis 7,
**dadurch gekennzeichnet,**
**dass** die Partikel aus einem anorganischen Material bestehen, insbesondere
aus Glas, Glaskeramik oder Keramik, besonders bevorzugt aus Silikatglas, Kalknatronglas, Borosilikatglas.

9. Scheibenförmiges Substrat nach einem der Ansprüche 4 bis 8,
**dadurch gekennzeichnet,**
**dass** wenigstens eine Schicht eingefärbt ist

10. Scheibenförmiges Substrat nach einem der Ansprüche 4 bis 9,
**dadurch gekennzeichnet,**
**dass** das Substrat aus einem transparenten oder transluzenten Material besteht.

11. Verwendung des nach einem der Ansprüche 1 bis 3 hergestellten beschichteten Substrats oder des scheibenförmigen Substrats nach einem der Ansprüche 5 bis 11 bestehend aus thermisch vorgespanntem, gefloateten Kalk-Natron-Glas als Sichtscheibe in einem Küchenofen oder als Frontscheibe in Küchengeräten oder Möbeln, Frontscheibe von elektrischen Geräten, sowie als Scheibenelement in der Innen- und Außenarchitektur

12. Verwendung des nach einem der Ansprüche 1 bis 3 hergestellten beschichteten Substrats oder des scheibenförmigen Substrats nach einem der Ansprüche 5 bis 11 bestehend aus gefloateten Borosilikatglas als Sichtscheibe in einem Kamin oder Küchenofen oder Bestandteil in einem Sicherheitsglaslaminat

13. Verwendung des nach einem der Ansprüche 1 bis 3 hergestellten beschichteten Substrats oder des scheibenförmigen Substrats nach einem der Ansprüche 5 bis 11 bestehend aus LAS-Glaskeramik als Kochfläche oder Sichtscheibe in einem Kamin oder Küchenofen.

## Claims

1. A method for producing a coated substrate, wherein the substrate is made of glass or glass ceramic, comprising the steps of:
- providing a sheet-like substrate;
- applying a first layer-forming material onto a first side of the substrate, the first layer-forming material comprising at least one glass powder and particles, the particles causing elevations on the layer, wherein the softening temperature or melting temperature of the particles is greater than the softening temperature of the glass powder;
- heating the coated substrate to obtain the first layer with elevations;
- applying a second layer-forming material onto a second side of the substrate, the second side being opposite to the first side;
- heating the coated substrate to obtain the second layer, wherein during the heating the substrate rests wholly or partially on the elevations of the first layer; wherein
- the second layer also comprises a glass component and the layer materials on both sides of the substrate preferably consist of inorganic glass-based enamel; and wherein
- the softening temperatures of the glass components on the two sides of the substrate differ by less than 200 K.

2. The method according to claim 1, **characterized in that** the temperature during heating is at or above the softening temperature of the glass powder and below the melting temperature or softening temperature of the particles.

3. The method according to any one of the preceding claims, **characterized by** at least one of the following features:
- the glass powder flows smoothly below the deformation temperature of the substrate material; and/or
- the first layer-forming material contains at least 5 to 99.7 vol% of glass powder, and/or the mean diameter of the particles is in a range from 0.5 to 40 µm; and/or
- the second layer-forming material also comprises at least one glass powder.

4. A sheet-like substrate, wherein the substrate material consists of glass or glass ceramic, comprising at least two layers that have been applied by heating, **characterized in**
- **that** the first layer is applied on a first side of the substrate and comprises at least one glass component and particles;
- **that** the particles cause elevations on the first layer;
- **that** the softening temperature or the melting temperature of the particles is greater than the softening temperature of the glass component; and
- **that** the second layer is deposited on a second side of the substrate, the second side being opposite to the first side, wherein the second layer also comprises a glass component and the layer materials on both sides of the substrate consist preferably of inorganic glass-based enamel; and
- wherein the softening temperatures of the glass components on the two sides of the substrate differ by less than 200 K.

5. The sheet-like substrate according to claim 4, **characterized in that** the softening temperatures of the glass components on both sides of the substrate differ by less than 100 K.

6. The sheet-like substrate according to any one of claims 4 or 5, **characterized by** at least one of the following features:
- the particles have a mean spacing of less than twenty times the mean particle diameter; and/or
- the particles protrude from the layer formed by the glass components by 10 to 70 % of their mean diameter.

7. The sheet-like substrate according to any one of claims 4 to 6, **characterized in that** the particles have a rounded outer contour, preferably in spherical form.

8. The sheet-like substrate according to any one of claims 4 to 7, **characterized in that** the particles consist of an inorganic material, in particular glass, glass ceramic or ceramic, more preferably silicate glass, soda-lime glass, borosilicate glass.

9. The sheet-like substrate according to any one of claims 4 to 8, **characterized in that** at least one layer is dyed.

10. The sheet-like substrate according to any one of claims 4 to 9, **characterized in that** the substrate consists of a transparent or translucent material.

11. Use of the coated substrate produced according to any one of claims 1 to 3 or of the sheet-like substrate produced according to any one of claims 5 to 11 and made of thermally toughened, floated soda-lime glass as a viewing window in a kitchen oven or as a front panel in kitchen appliances or furniture, as a front panel of electrical appliances, and as a panel element in interior and exterior architecture.

12. Use of the coated substrate produced according to any one of claims 1 to 3 or of the sheet-like substrate produced according to any one of claims 5 to 11 and made of floated borosilicate glass as a viewing window in a fireplace or kitchen oven or as a component in a safety glass laminate.

13. Use of the coated substrate produced according to any one of claims 1 to 3 or of the sheet-like substrate produced according to any one of claims 5 to 11 and made of LAS glass ceramic as a cooking surface or viewing window in a fireplace or kitchen oven.

## Revendications

1. Procédé de fabrication d'un substrat revêtu, le substrat se composant de verre ou de vitrocéramique, comprenant les étapes de :
mise à disposition d'un substrat en forme de plaque ;
- dépôt d'un premier matériau formant couche sur une première face du substrat, le premier matériau formant couche comprenant au moins une poudre de verre et des particules, les particules provoquant des élévations sur la couche, la température de ramollissement ou la température de fusion des particules étant supérieure à la température de ramollissement de la poudre de verre ;
- chauffage du substrat revêtu en obtenant la première couche pourvue d'élévations ;
- dépôt d'un deuxième matériau formant couche sur une deuxième face du substrat, la deuxième face se trouvant à l'opposé de la première face ;
- chauffage du substrat revêtu en obtenant la deuxième couche, le substrat reposant partiellement ou entièrement sur les élévations de la première couche pendant le chauffage,
- la deuxième couche comprenant également un composant de verre et les matériaux de couche sur les deux faces du substrat se composant de préférence d'émaux inorganiques à base de verre, et
- les températures de ramollissement des composants de verre sur les deux faces du substrat se distinguant de moins de 200 K.

2. Procédé selon la revendication 1, **caractérisé en ce que** la température lors du chauffage se situe à ou au-dessus de la température de ramollissement de la poudre de verre et en dessous de la température de fusion ou de la température de ramollissement des particules.

3. Procédé selon l'une des revendications précédentes, **caractérisé par** au moins l'une des caractéristiques suivantes :
- la poudre de verre s'écoule en dessous de la température de formage du matériau du substrat et/ou
- le premier matériau formant couche contient au moins 5 à 99,7 % en volume de poudre de verre et/ou le diamètre moyen des particules réside dans la plage de 0,5 à 40 µm, et/ou
- le deuxième matériau formant couche comprend également au moins une poudre de verre.

4. Substrat en forme de plaque, le matériau de substrat se composant de verre ou de vitrocéramique, comprenant au moins deux couches déposées par chauffage, **caractérisé en ce que** la première couche est déposée sur une première face du substrat et comprend au moins un composant de verre et des particules, **en ce que** les particules provoquent des élévations sur la première couche, **en ce que** la température de ramollissement ou la température de fusion des particules est supérieure à la température de ramollissement du composant de verre, et **en ce que** la deuxième couche est déposée sur une deuxième face du substrat, la deuxième face se trouvant à l'opposé de la première face, la deuxième couche comprenant également un composant de verre et les matériaux de couche sur les deux faces du substrat se composant de préférence d'émaux inorganiques à base de verre, et les températures de ramollissement des composants de verre sur les deux faces du substrat se distinguant de moins de 200 K.

5. Substrat en forme de plaque selon la revendication 4, **caractérisé en ce que** les températures de ramollissement des composants de verre sur les deux faces du substrat se distinguent de moins de 100 K.

6. Substrat en forme de plaque selon l'une des revendications 4 ou 5, **caractérisé par** au moins l'une des caractéristiques suivantes :
- les intervalles moyens entre particules atteignent moins du 20^{ème} du diamètre moyen des particules et/ou les particules dépassent de la couche formée par les composants de verre de 10 à 70 % de leur diamètre moyen.

7. Substrat en forme de plaque selon l'une des revendications 4 à 6, **caractérisé en ce que** les particules possèdent un contour extérieur arrondi, de préférence de forme sphérique.

8. Substrat en forme de plaque selon l'une des revendications 4 à 7, **caractérisé en ce que** les particules se composent d'un matériau inorganique, en particulier de verre, de vitrocéramique ou de céramique, de manière particulièrement préférée de verre silicaté, de verre sodo-calcique, de verre de borosilicate.

9. Substrat en forme de plaque selon l'une des revendications 4 à 8, **caractérisé en ce qu'**au moins une couche est teintée.

10. Substrat en forme de plaque selon l'une des revendications 4 à 9, **caractérisé en ce que** le substrat se compose d'un matériau transparent ou translucide.

11. Utilisation du substrat revêtu fabriqué selon l'une des revendications 1 à 3 ou du substrat en forme de plaque selon l'une des revendications 5 à 11 se composant de verre sodo-calcique flotté, précontraint thermiquement, en tant que plaque vitrée dans un four de cuisine ou en tant que plaque frontale dans des appareils de cuisine ou des meubles, plaque frontale d'appareils électriques, ainsi qu'élément en plaque dans l'architecture intérieure et extérieure.

12. Utilisation du substrat revêtu fabriqué selon l'une des revendications 1 à 3 ou du substrat en forme de plaque selon l'une des revendications 5 à 11 se composant de verre de borosilicate flotté comme plaque vitrée dans une cheminée ou un four de cuisine ou composant d'un stratifié de verre de sécurité.

13. Utilisation du substrat revêtu fabriqué selon l'une des revendications 1 à 3 ou du substrat en forme de plaque selon l'une des revendications 5 à 11 se composant d'une vitrocéramique LAS comme surface de cuisson ou plaque vitrée dans une cheminée ou un four de cuisine.
